# EUROPEAN PATENT APPLICATION

(11) **EP 4 768 114 A1**
(43) Date of publication of application: **01.07.2026**
(21) Application number: 24888689.7
(22) Date of filing: 05.11.2024
(51) Int. Cl.: B01D 53/14, B01D 53/62, B01D 53/78, C01B 32/50

(54) **CARBON DIOXIDE RECOVERY SYSTEM**

(30) Priority: 09.11.2023 JP 2023191537
(71) Applicant: MITSUBISHI HEAVY INDUSTRIES, LTD., Tokyo 100-8332 (JP)
(72) Inventor: NAKAGAWA, Yosuke, Tokyo 100-8332 (JP); NAGAYASU, Hiromitsu, Tokyo 100-8332 (JP); MIYAMOTO, Osamu, Tokyo 100-8332 (JP); KAMIJO, Takashi, Tokyo 100-8332 (JP); SAOTOME, Takashi, Tokyo 100-8332 (JP); KAMADA, Toru, Tokyo 100-8332 (JP); KISHIMOTO, Shinya, Tokyo 100-8332 (JP)
(74) Representative: Studio Torta S.p.A.
(86) International application number: PCT/JP2024/039248
(87) International publication number: WO 2025/100394

(57) **Abstract**

A carbon dioxide recovery system includes a recycle unit capable of adjusting a supply amount of a regenerator discharge gas in a recycle line. The recycle unit includes a first recycle line capable of supplying the regenerator discharge gas before being compressed, and a second recycle line capable of supplying the regenerator discharge gas after being compressed. A first recycle valve is opened when a value of a pressure detected by a first pressure detection unit exceeds a pressure reference, and the first recycle valve is closed when the pressure falls below the pressure reference. A second recycle valve is opened when a value of a pressure detected by a second pressure detection unit exceeds the pressure reference, and the second recycle valve is closed when the pressure falls below the pressure reference.

## Description

### TECHNICAL FIELD

The present disclosure relates to a carbon dioxide recovery system.

Priority is claimed on Japanese Patent Application No. 2023-191537, filed November 9, 2023, the content of which is incorporated herein by reference.

### BACKGROUND ART

In recent years, from the viewpoint of carbon neutrality, attention has been focused on the concentration of carbon dioxide (CO₂) contained in the atmosphere. From the viewpoint of reducing the concentration of carbon dioxide in the atmosphere, a carbon dioxide recovery system that recovers carbon dioxide from an exhaust gas is known. In the carbon dioxide recovery system, an absorption liquid is circulated between a regenerator and an absorber to recover carbon dioxide from the exhaust gas.

For example, Patent Document 1 describes a carbon dioxide recovery system capable of responding to a rapid change in the carbon dioxide concentration or the gas flow rate of a treatment target gas containing carbon dioxide. This carbon dioxide recovery system includes an absorber that absorbs carbon dioxide with an absorption liquid and a regenerator that removes carbon dioxide from the absorption liquid and returns the absorption liquid to the absorber again. In the absorber, the treatment target gas and the absorption liquid are brought into contact with each other. As a result, the absorber discharges an absorption liquid that has absorbed carbon dioxide and an absorber discharge gas containing the treatment target gas from which carbon dioxide has been removed. In addition, in the regenerator, carbon dioxide is released from the absorption liquid discharged from the absorber. As a result, the regenerator discharges an absorption liquid from which carbon dioxide has been released and a regenerator discharge gas containing carbon dioxide. Further, the carbon dioxide recovery system of Patent Document 1 further includes a first introduction mechanism that introduces a first gas having a higher carbon dioxide concentration than the treatment target gas into a treatment target gas line for introducing the treatment target gas into the absorber, and a second introduction mechanism that introduces a second gas having a lower carbon dioxide concentration than the treatment target gas into the treatment target gas line. By supplying gases having different carbon dioxide concentrations in this way, the carbon dioxide recovery system of Patent Document 1 responds to a rapid change in the carbon dioxide concentration or the gas flow rate of the treatment target gas.

### Citation List

### Patent Document

Patent Document 1: Japanese Patent No. 6148522

### SUMMARY OF INVENTION

### Technical Problem

Meanwhile, in the above-described carbon dioxide recovery system, it is necessary to control the concentration of carbon dioxide supplied to the absorber. Therefore, in order to maintain the concentration of carbon dioxide, the operation is provided in which recycling is always performed from the outlet of the regenerator, and wasteful energy is consumed.

The present disclosure provides a carbon dioxide recovery system capable of adjusting the amount of carbon dioxide returned from a regenerator to an absorber and suppressing the discharge amount to the outside.

### Solution to Problem

There is provided a carbon dioxide recovery system according to the present disclosure including: an absorber configured to bring a treatment target gas containing carbon dioxide into contact with an absorption liquid and discharge the absorption liquid absorbing the carbon dioxide and an absorber discharge gas containing the treatment target gas from which the carbon dioxide is removed; a regenerator configured to release the carbon dioxide from the absorption liquid discharged from the absorber and discharge the absorption liquid from which the carbon dioxide is released and a regenerator discharge gas containing the carbon dioxide; a treatment target gas line configured to introduce the treatment target gas into the absorber; a regenerator discharge line configured to discharge the regenerator discharge gas discharged from the regenerator to the outside; a discharge compressor configured to compress the regenerator discharge gas, the discharge compressor being installed in the regenerator discharge line; a recycle line configured to connect the regenerator discharge line and the treatment target gas line; and a recycle unit configured to adjust a supply amount of the regenerator discharge gas supplied from the regenerator discharge line to the treatment target gas line through the recycle line, in which the recycle unit includes a first recycle line configured to supply at least a part of the regenerator discharge gas before being compressed by the discharge compressor to the treatment target gas line, the first recycle line being connected to the regenerator discharge line between the regenerator and the discharge compressor, and a second recycle line configured to supply at least a part of the regenerator discharge gas compressed by the discharge compressor to the treatment target gas line, the recycle unit further includes a first recycle valve configured to adjust the supply amount of the regenerator discharge gas from the regenerator discharge line to the treatment target gas line, the first recycle valve being installed in the first recycle line, a first pressure detection unit configured to detect information on a pressure of the regenerator discharge gas flowing through the regenerator discharge line between the regenerator and the discharge compressor, a second recycle valve configured to adjust the supply amount of the regenerator discharge gas from the regenerator discharge line to the treatment target gas line, the second recycle valve being installed in the second recycle line, a second pressure detection unit configured to detect information on a pressure of the regenerator discharge gas compressed by the discharge compressor and flowing through the regenerator discharge line, and a control unit configured to control opening degrees of the first recycle valve and the second recycle valve, and the control unit is configured to open the first recycle valve when the pressure detected by the first pressure detection unit exceeds a predetermined pressure reference and close the first recycle valve when the pressure detected by the first pressure detection unit falls below the pressure reference, and open the second recycle valve when the pressure detected by the second pressure detection unit exceeds the pressure reference and close the second recycle valve when the pressure detected by the second pressure detection unit falls below the pressure reference. Advantageous Effects of Invention

According to the carbon dioxide recovery system of the present disclosure, it is possible to adjust the amount of carbon dioxide returned from the regenerator to the absorber and suppress the discharge amount to the outside.

### BRIEF DESCRIPTION OF DRAWINGS

[FIG. 1] A schematic diagram showing a carbon dioxide recovery system according to a first embodiment.
[FIG. 2] A schematic diagram showing a carbon dioxide recovery system according to a second embodiment.
[FIG. 3] A schematic diagram showing a carbon dioxide recovery system according to a third embodiment.
[FIG. 4] A schematic diagram showing a carbon dioxide recovery system according to a fourth embodiment.
[FIG. 5] A schematic diagram showing a carbon dioxide recovery system according to a fifth embodiment.

### DESCRIPTION OF EMBODIMENTS

Hereinafter, an embodiment for implementing a carbon dioxide recovery system according to the present disclosure will be described with reference to the accompanying drawings. However, the present disclosure is not limited to only this embodiment.

### <First Embodiment>

### (Carbon Dioxide Recovery System)

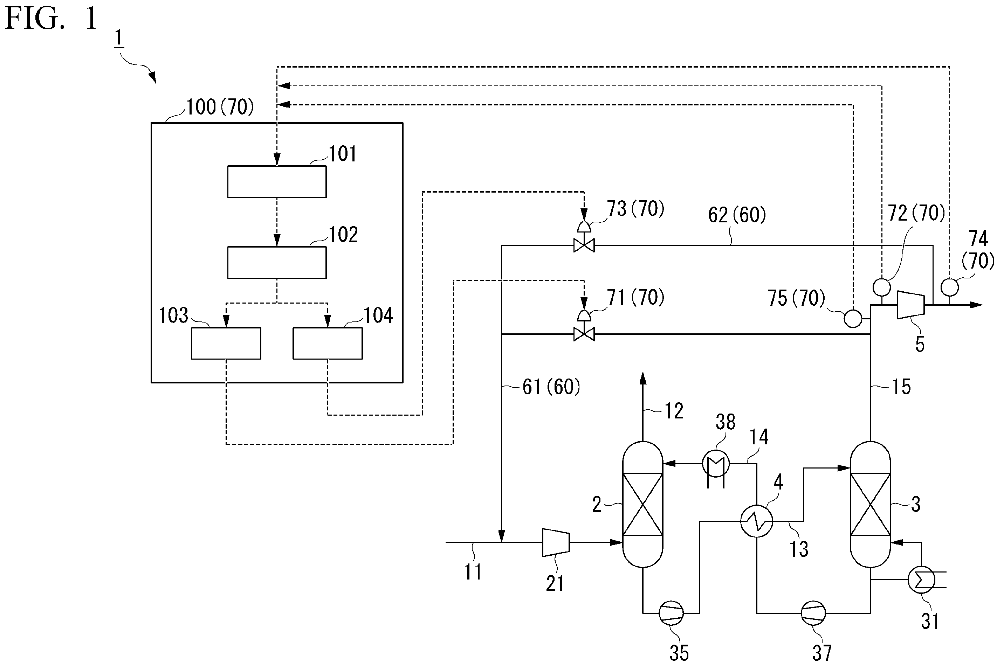

A carbon dioxide recovery system 1 is capable of recovering carbon dioxide (CO₂) from a treatment target gas from an exhaust gas generation source (not shown). Examples of the exhaust gas generation source include a boiler, an incinerator, a gas turbine, and a manufacturing plant for SAF or ethanol. That is, examples of the treatment target gas include an exhaust gas containing carbon dioxide that is finally discharged and a process gas containing carbon dioxide that is used in the middle of various plants. As shown in FIG. 1, the treatment target gas supplied from the exhaust gas generation source is fed to the carbon dioxide recovery system 1.

The carbon dioxide recovery system 1 of the present embodiment includes an absorber 2, a treatment target gas line 11, a gas blow unit 21, a regenerator 3, a rich line 13, a lean line 14, an absorption liquid heat exchanger 4, a regenerator discharge line 15, a discharge compressor 5, a recycle line 60, and a recycle unit 70.

The treatment target gas containing carbon dioxide is introduced into the absorber 2. The absorber 2 brings the treatment target gas into contact with an absorption liquid to remove carbon dioxide from the treatment target gas. Examples of the absorption liquid include an amine-based solution. The absorber 2 separately discharges the absorption liquid that has absorbed carbon dioxide and an absorber discharge gas containing the treatment target gas from which carbon dioxide has been removed.

The treatment target gas line 11 introduces the treatment target gas into the absorber 2. The treatment target gas line 11 feeds the treatment target gas fed from the exhaust gas generation source to the absorber 2 after cooling the treatment target gas with a cooling device (not shown). The treatment target gas line 11 is connected to the absorber 2.

The gas blow unit 21 is installed in the treatment target gas line 11. The gas blow unit 21 is a blower that blows the treatment target gas to be introduced into the absorber 2. The gas blow unit 21 increases the pressure of the treatment target gas after cooling to any pressure required for the treatment in the absorber 2.

An absorber discharge line 12 discharges the absorber discharge gas discharged from the absorber 2 to the outside. The absorber discharge line 12 is connected to the top portion of the absorber 2.

The regenerator 3 releases carbon dioxide from the absorption liquid discharged from the absorber 2. The regenerator 3 heats the absorption liquid by a reboiler 31. As a result, in the regenerator 3, most of the carbon dioxide is released from the absorption liquid together with the steam, and the carbon dioxide is separated from the absorption liquid. High-temperature steam is supplied to the reboiler 31. In the reboiler 31, the absorption liquid is heated by performing heat exchange between the steam and the absorption liquid. The regenerator 3 separately discharges the absorption liquid from which the carbon dioxide has been released and the regenerator discharge gas containing the carbon dioxide.

The rich line 13 supplies the absorption liquid that has absorbed the carbon dioxide from the absorber 2 to the regenerator 3. Here, the absorption liquid discharged from the absorber 2 and flowing through the rich line 13 is referred to as a rich liquid. The rich liquid is an absorption liquid having a high concentration of carbon dioxide after the carbon dioxide is absorbed in the absorber 2. The rich line 13 connects the bottom portion of the absorber 2 and the upper part of the regenerator 3. A rich pump 35 is installed in the rich line 13. The rich pump 35 increases the pressure of the rich liquid and feeds the rich liquid to the regenerator 3 via the absorption liquid heat exchanger 4.

The lean line 14 supplies the absorption liquid from which the carbon dioxide has been released from the regenerator 3 to the absorber 2. Here, the absorption liquid discharged from the regenerator 3 and flowing through the lean line 14 is referred to as a lean liquid. The lean liquid is an absorption liquid having a low concentration of carbon dioxide after the carbon dioxide is released in the regenerator 3. That is, the concentration of carbon dioxide in the lean liquid is lower than that in the rich liquid. The lean line 14 connects the bottom portion of the regenerator 3 and the upper part of the absorber 2. A lean pump 37 and a cooler 38 are installed in the lean line 14. The lean pump 37 increases the pressure of the lean liquid and feeds the lean liquid to the absorber 2 via the absorption liquid heat exchanger 4. The cooler 38 further cools the absorption liquid cooled by the absorption liquid heat exchanger 4 and feeds the absorption liquid to the absorber 2.

The absorption liquid heat exchanger 4 performs heat exchange between the rich liquid flowing through the rich line 13 and the lean liquid flowing through the lean line 14. As a result, in the absorption liquid heat exchanger 4, the absorption liquid flowing through the rich line 13 in a state of being pressurized by the rich pump 35 to flow from the absorber 2 toward the regenerator 3 is heated. In addition, in the absorption liquid heat exchanger 4, the absorption liquid flowing through the lean line 14 in a state of being pressurized by the lean pump 37 to flow from the regenerator 3 toward the absorber 2 is cooled.

The regenerator discharge line 15 discharges the regenerator discharge gas discharged from the regenerator 3 to the outside (outside the system) of the carbon dioxide recovery system 1. The regenerator discharge line 15 is connected to the top portion of the regenerator 3. The regenerator discharge line 15 transfers the regenerator discharge gas to an external transfer destination according to the purpose of use. The regenerator discharge gas discharged from the regenerator discharge line 15 is converted to a state according to the purpose of use, for example, and is stored in a tank, a tanker truck, a pipeline, an oil field, an aquifer, or the like.

The discharge compressor 5 is installed in the regenerator discharge line 15. The discharge compressor 5 compresses the regenerator discharge gas. More specifically, the discharge compressor 5 compresses the regenerator discharge gas flowing through the regenerator discharge line 15 until the regenerator discharge gas reaches a state according to the purpose of use, such as a supercritical state or a liquid state.

The recycle line 60 is capable of supplying the regenerator discharge gas to the absorber 2. The recycle line 60 connects the regenerator discharge line 15 and the treatment target gas line 11. The recycle line 60 of the present embodiment includes a first recycle line 61 and a second recycle line 62.

The first recycle line 61 is capable of supplying at least a part of the regenerator discharge gas before being compressed by the discharge compressor 5 to the treatment target gas line 11. The first recycle line 61 is connected to the regenerator discharge line 15 between the regenerator 3 and the discharge compressor 5. The first recycle line 61 of the present embodiment is connected to the treatment target gas line 11 such that at least a part of the regenerator discharge gas merges with the treatment target gas before being supplied to the gas blow unit 21. Therefore, the first recycle line 61 is connected to the treatment target gas line 11 upstream of the gas blow unit 21. That is, the first recycle line 61 supplies the regenerator discharge gas discharged from the regenerator 3 and before being compressed by the discharge compressor 5 to the treatment target gas line 11 before being fed to the gas blow unit 21.

The upstream and the downstream in the present embodiment are the upstream and the downstream in the flow direction of various gases flowing in the carbon dioxide recovery system 1.

The second recycle line 62 is capable of supplying at least a part of the regenerator discharge gas compressed by the discharge compressor 5 to the treatment target gas line 11. The second recycle line 62 is connected to the regenerator discharge line 15 at the front end of the discharge compressor 5 (downstream of the discharge compressor 5). The second recycle line 62 of the present embodiment is connected to the treatment target gas line 11 upstream of the gas blow unit 21. More specifically, the second recycle line 62 merges with the first recycle line 61 and is connected to the treatment target gas line 11. As a result, the second recycle line 62 is indirectly connected to the treatment target gas line 11 via the first recycle line 61 such that at least a part of the regenerator discharge gas merges with the treatment target gas before being supplied to the gas blow unit 21. That is, the second recycle line 62 supplies the regenerator discharge gas discharged from the regenerator 3 and after being compressed by the discharge compressor 5 to the treatment target gas line 11 before being fed to the gas blow unit 21.

The recycle unit 70 is capable of adjusting the supply amount of the regenerator discharge gas supplied from the regenerator discharge line 15 to the treatment target gas line 11 through the recycle line 60. The recycle unit 70 is capable of adjusting the supply amount of the regenerator discharge gas returned to the absorber 2 from the first recycle line 61 and the second recycle line 62 through the treatment target gas line 11. The recycle unit 70 of the present embodiment includes a first recycle valve 71, a first pressure detection unit 72, a second recycle valve 73, a second pressure detection unit 74, a discharge concentration detection unit 75, and a control unit 100.

The first recycle valve 71 is capable of adjusting the supply amount of the regenerator discharge gas before being compressed from the regenerator discharge line 15 to the treatment target gas line 11. The first recycle valve 71 is installed in the first recycle line 61. That is, the first recycle valve 71 adjusts the supply amount of the regenerator discharge gas to the treatment target gas line 11 before being compressed by the discharge compressor 5. The first recycle valve 71 of the present embodiment is a control valve of which opening and closing are controlled by the control unit 100.

The first pressure detection unit 72 detects information on the pressure of the regenerator discharge gas flowing through the regenerator discharge line 15 between the regenerator 3 and the discharge compressor 5. The first pressure detection unit 72 is a pressure gauge installed in the regenerator discharge line 15 between the regenerator 3 and the discharge compressor 5. As a result, the first pressure detection unit 72 detects information on the pressure of the regenerator discharge gas before being supplied to the discharge compressor 5. The first pressure detection unit 72 outputs the detected information on the pressure of the regenerator discharge gas to the control unit 100 as a first pressure value.

The second recycle valve 73 is capable of adjusting the supply amount of the regenerator discharge gas after being compressed from the regenerator discharge line 15 to the treatment target gas line 11. The second recycle valve 73 is installed in the second recycle line 62. That is, the second recycle valve 73 adjusts the supply amount of the regenerator discharge gas to the treatment target gas line 11 after being compressed by the discharge compressor 5. The second recycle valve 73 of the present embodiment is a control valve of which opening and closing are controlled by the control unit 100.

The second pressure detection unit 74 detects information on the pressure of the regenerator discharge gas that is compressed by the discharge compressor 5 and flows through the regenerator discharge line 15. The second pressure detection unit 74 is a pressure gauge installed in the regenerator discharge line 15 downstream of the discharge compressor 5. As a result, the second pressure detection unit 74 detects information on the pressure of the regenerator discharge gas after being supplied to the discharge compressor 5. The second pressure detection unit 74 outputs the detected information on the pressure of the regenerator discharge gas to the control unit 100 as a second pressure value.

The discharge concentration detection unit 75 detects information on the concentration of carbon dioxide in the regenerator discharge gas flowing through the regenerator discharge line 15. The discharge concentration detection unit 75 of the present embodiment is a concentration meter installed in the regenerator discharge line 15 between the regenerator 3 and the discharge compressor 5. As a result, the discharge concentration detection unit 75 detects information on the concentration of carbon dioxide in the regenerator discharge gas before being supplied to the discharge compressor 5. The discharge concentration detection unit 75 outputs the detected information on the concentration of carbon dioxide in the regenerator discharge gas to the control unit 100 as a concentration value.

The control unit 100 controls the opening degrees of the first recycle valve 71 and the second recycle valve 73. The control unit 100 adjusts the opening degrees of the first recycle valve 71 and the second recycle valve 73 based on the information on the pressure of the regenerator discharge gas detected by the first pressure detection unit 72 and the second pressure detection unit 74. The control unit 100 of the present embodiment opens the first recycle valve 71 when the pressure detected by the first pressure detection unit 72 exceeds a predetermined pressure reference, and closes the first recycle valve 71 when the pressure falls below the pressure reference. In addition, the control unit 100 opens the second recycle valve 73 when the pressure detected by the second pressure detection unit 74 exceeds the pressure reference, and closes the second recycle valve 73 when the pressure falls below the pressure reference. In addition, the control unit 100 closes at least one of the first recycle valve 71 and the second recycle valve 73 when the concentration detected by the discharge concentration detection unit 75 exceeds a predetermined concentration reference. Further, the control unit 100 controls the first recycle valve 71 and the second recycle valve 73 to open at least one of the first recycle valve 71 and the second recycle valve 73 when the concentration falls below the concentration reference. The control unit 100 of the present embodiment includes an input unit 101, a determination unit 102, a first valve control unit 103, and a second valve control unit 104.

The input unit 101 detects signals from various configurations of the recycle unit 70. The input unit 101 of the present embodiment detects information from the first pressure detection unit 72, the second pressure detection unit 74, and the discharge concentration detection unit 75. The input unit 101 outputs the detected information from the first pressure detection unit 72, the second pressure detection unit 74, and the discharge concentration detection unit 75 to the determination unit 102.

The determination unit 102 determines the information input from the input unit 101. The determination unit 102 of the present embodiment determines whether or not the first pressure value input from the first pressure detection unit 72 exceeds the predetermined pressure reference. Here, the pressure reference is a value determined in advance, and is the pressure set as the upper limit value of the operation management range in the regenerator 3. That is, when the pressure reference is exceeded, the regenerator discharge gas immediately after being discharged from the regenerator 3 can be supplied to the treatment target gas line 11 in the same state. In a case where the first pressure value exceeds the pressure reference, the determination unit 102 sends a signal to open the first recycle valve 71 to the first valve control unit 103. In addition, when the first pressure value exceeds the pressure reference, the determination unit 102 sends a signal to close the second recycle valve 73 to the second valve control unit 104. In addition, when the first pressure value falls below the pressure reference, the determination unit 102 sends a signal to close the first recycle valve 71 to the first valve control unit 103.

In addition, the determination unit 102 determines whether or not the second pressure value input from the second pressure detection unit 74 exceeds the pressure reference. Further, the determination unit 102 determines whether or not the second pressure value exceeds a storage pressure reference, which is a value smaller than the pressure reference. The storage pressure reference is a value determined in advance, and is the pressure when the regenerator discharge gas can be stored. That is, when the second pressure value is below the storage pressure reference, the regenerator discharge gas is not suitable for storage, and the regenerator discharge gas is in a state where it cannot be discharged from the regenerator discharge line 15 to the transfer destination. In a case where the second pressure value exceeds the pressure reference and the storage pressure reference, the determination unit 102 sends a signal to open the second recycle valve 73 to the second valve control unit 104. In addition, when the second pressure value falls below the pressure reference and exceeds the storage pressure reference, the determination unit 102 sends a signal to close the second recycle valve 73 to the second valve control unit 104. In addition, when the second pressure value falls below the pressure reference and the storage pressure reference, the determination unit 102 sends a signal to close the second recycle valve 73 to the second valve control unit 104.

In addition, the determination unit 102 determines whether or not the concentration value input from the discharge concentration detection unit 75 exceeds the predetermined concentration reference. The concentration reference is a value determined in advance, and is the concentration when the regenerator discharge gas can be stored. That is, when the concentration value is below the concentration reference, the regenerator discharge gas is not suitable for storage, and the regenerator discharge gas is in a state where it cannot be discharged from the regenerator discharge line 15. In a case where the concentration value exceeds the concentration reference, the determination unit 102 sends a signal to control the opening degree of the first recycle valve 71 or the second recycle valve 73 according to the determination result of the pressure reference or the storage pressure reference to the first valve control unit 103 and the second valve control unit 104. Further, when the concentration value falls below the concentration reference, the determination unit 102 sends a signal to open the first recycle valve 71 to the first valve control unit 103 regardless of the determination result of the pressure reference or the storage pressure reference.

The first valve control unit 103 controls the opening degree of the first recycle valve 71 based on the signal from the determination unit 102. In a case where the determination result that the concentration value falls below the concentration reference is received from the determination unit 102, the first valve control unit 103 opens the first recycle valve 71 regardless of the determination result of the pressure reference or the storage pressure reference. In a case where the determination result that the concentration value exceeds the concentration reference and the first pressure value exceeds the pressure reference is received from the determination unit 102, the first valve control unit 103 opens the first recycle valve 71 regardless of the determination result of the storage pressure reference. In a case where the determination result that the concentration value exceeds the concentration reference and the first pressure value falls below the pressure reference is received from the determination unit 102, the first valve control unit 103 closes the first recycle valve 71 regardless of the determination result of the storage pressure reference.

The second valve control unit 104 controls the opening degree of the second recycle valve 73 based on the signal from the determination unit 102. In a case where the determination result that the concentration value falls below the concentration reference is received from the determination unit 102, the second valve control unit 104 closes the second recycle valve 73 regardless of the determination result of the pressure reference or the storage pressure reference. In a case where the determination result that the concentration value exceeds the concentration reference and the second pressure value exceeds the pressure reference is received from the determination unit 102, the second valve control unit 104 opens the second recycle valve 73 regardless of the determination result of the storage pressure reference. In a case where the determination result that the concentration value exceeds the concentration reference and the second pressure value falls below the pressure reference and the storage pressure reference is received from the determination unit 102, the second valve control unit 104 closes the second recycle valve 73. In a case where the determination result that the concentration value exceeds the concentration reference, the second pressure value exceeds the pressure reference, and the second pressure value falls below the storage pressure reference is received from the determination unit 102, the second valve control unit 104 closes the second recycle valve 73.

### (Action and Effect)

In the carbon dioxide recovery system 1 having the above-described configuration, the treatment target gas flowing through the treatment target gas line 11 is pressurized by the gas blow unit 21 and is fed to the absorber 2. The treatment target gas, which is pressurized and has an increased flow rate, comes into contact with the absorption liquid in the absorber 2, and thus carbon dioxide is removed. As a result, the absorber discharge gas from which carbon dioxide has been removed is discharged from the absorber 2 to the outside through the absorber discharge line 12. In addition, in the absorber 2, a rich liquid, which is an absorption liquid that has absorbed carbon dioxide, is generated. The rich liquid is pressurized by the rich pump 35 and is fed to the absorption liquid heat exchanger 4 through the rich line 13. The rich liquid is heated in the absorption liquid heat exchanger 4 and further flows through the rich line 13 to be fed to the regenerator 3. In the regenerator 3, the rich liquid is heated by the reboiler 31, and thus carbon dioxide is released from the rich liquid. As a result, in the regenerator 3, a lean liquid, which is an absorption liquid from which carbon dioxide has been released, is generated. The lean liquid is pressurized by the lean pump 37 and is fed to the absorption liquid heat exchanger 4 through the lean line 14. The lean liquid is cooled by exchanging heat with the rich liquid in the absorption liquid heat exchanger 4. The cooled lean liquid is further cooled by the cooler 38 and is returned to the absorber 2. In this way, the absorption liquid circulates between the absorber 2 and the regenerator 3. In addition, in the regenerator 3, a regenerator discharge gas containing carbon dioxide generated by releasing carbon dioxide from the rich liquid is generated and is fed to the regenerator discharge line 15.

Before the regenerator discharge gas flowing through the regenerator discharge line 15 is fed to the discharge compressor 5, a first pressure value, which is information on the pressure, is detected by the first pressure detection unit 72. In a case where the first pressure value exceeds the pressure reference, the first recycle valve 71 is opened by the control unit 100. As a result, when the first pressure value exceeds the pressure reference, the regenerator discharge gas before being compressed by the discharge compressor 5 is fed to the treatment target gas line 11 through the first recycle line 61. The regenerator discharge gas fed to the treatment target gas line 11 is pressurized by the gas blow unit 21 and is fed to the absorber 2.

In addition, when the first pressure value falls below the pressure reference, the first recycle valve 71 is closed. Therefore, the regenerator discharge gas cannot flow through the first recycle line 61 and is fed to the discharge compressor 5 without being fed to the treatment target gas line 11. The regenerator discharge gas fed to the discharge compressor 5 is compressed, and the pressure increases. Thereafter, a second pressure value, which is information on the pressure, is detected by the second pressure detection unit 74 for the regenerator discharge gas compressed by the discharge compressor 5. In a case where the second pressure value exceeds the pressure reference, the second recycle valve 73 is opened by the control unit 100. As a result, when the second pressure value exceeds the pressure reference, the compressed regenerator discharge gas is fed to the treatment target gas line 11 through the second recycle line 62. The regenerator discharge gas fed to the treatment target gas line 11 is pressurized by the gas blow unit 21 and is fed to the absorber 2.

In addition, when the second pressure value falls below the pressure reference, the second recycle valve 73 is closed. Therefore, the compressed regenerator discharge gas cannot flow through the second recycle line 62, and the compressed regenerator discharge gas is fed to the external transfer destination without being fed to the treatment target gas line 11.

In this way, the pressure of the regenerator discharge gas flowing through the regenerator discharge line 15 is detected by the first pressure detection unit 72 and the second pressure detection unit 74 at each of positions upstream and downstream of the discharge compressor 5. Then, the first recycle valve 71 and the second recycle valve 73 are opened and closed based on the results from the first pressure detection unit 72 and the second pressure detection unit 74. Therefore, when the pressure of the regenerator discharge gas immediately after being discharged from the regenerator 3 is high, the regenerator discharge gas can be fed from the first recycle line 61 to the treatment target gas line 11. In addition, when the pressure of the regenerator discharge gas immediately after being discharged from the regenerator 3 is low, the regenerator discharge gas can be fed from the second recycle line 62 to the treatment target gas line 11 after being compressed by the discharge compressor 5. In this way, regardless of the pressure of the regenerator discharge gas immediately after being discharged from the regenerator 3, the regenerator discharge gas having a pressure that can be used in the absorber 2 can be fed to the treatment target gas line 11. Therefore, most of the regenerator discharge gas discharged from the regenerator 3 can be fed to the absorber 2 and recycled. As a result, the amount of carbon dioxide returned from the regenerator 3 to the absorber 2 can be adjusted, and the discharge amount to the outside can be suppressed.

In addition, in the determination unit 102 of the control unit 100, it is determined whether the second pressure value exceeds not only the pressure reference but also the storage pressure reference. In this way, by determining the second pressure value not only with the pressure reference but also with the storage pressure reference smaller than the pressure reference, it is possible to ascertain whether the regenerator discharge gas has reached a pressure suitable for supply to the transfer destination. Then, when the second pressure value exceeds the pressure reference and the storage pressure reference, the control unit 100 opens the second recycle valve 73. In addition, when the second pressure value falls below the pressure reference and exceeds the storage pressure reference, the control unit 100 closes the second recycle valve 73. Further, the control unit 100 closes the second recycle valve 73 even when the second pressure value falls below the pressure reference and the storage pressure reference. In a case where the second pressure value exceeds the storage pressure reference, the regenerator discharge gas is generally in a state of being capable of being supplied to the transfer destination. However, when the supply is stopped for some reason at the transfer destination, the pressure rises because the second recycle valve 73 is closed and the supply to the transfer destination is also not possible. Thereafter, the second pressure value finally becomes a value exceeding the pressure reference. As a result, in the control unit 100, it is determined that the second pressure value exceeds the pressure reference and the storage pressure reference, and the second recycle valve 73 is opened. As a result, even when the regenerator discharge gas cannot be supplied to the transfer destination, it is possible to suppress the excessive rise in the pressure of the regenerator discharge gas.

In addition, the concentration value, which is the information on the concentration of carbon dioxide in the regenerator discharge gas, is detected by the discharge concentration detection unit 75 for the regenerator discharge gas flowing through the regenerator discharge line 15. In a case where the concentration value detected by the discharge concentration detection unit 75 exceeds the concentration reference, the opening degree of the first recycle valve 71 or the second recycle valve 73 is adjusted by the control unit 100 in accordance with the determination result of the pressure reference or the storage pressure reference. On the other hand, when the concentration value falls below the concentration reference, the first recycle valve 71 is opened regardless of the determination result of the pressure reference or the storage pressure reference. Therefore, when the concentration of carbon dioxide in the regenerator discharge gas discharged from the regenerator 3 is too low to be suitable for supply to the transfer destination, the regenerator discharge gas is fed to the treatment target gas line 11 through the first recycle line 61. Therefore, even the regenerator discharge gas having a concentration of carbon dioxide that is not suitable for recycling is fed to the treatment target gas line 11. In this way, it is also possible to suppress the discharge of the regenerator discharge gas having a concentration of carbon dioxide that is not suitable for supply to the transfer destination to the outside. Therefore, it is possible to suppress the discharge amount of the regenerator discharge gas to the outside regardless of the concentration of carbon dioxide.

In addition, the first recycle line 61 after merging with the second recycle line 62 is connected to the treatment target gas line 11 at a position upstream of the gas blow unit 21. Therefore, the regenerator discharge gas can be merged with the treatment target gas having a low pressure before being supplied to the gas blow unit 21. Here, the pressure of the regenerator discharge gas flowing through the regenerator discharge line 15 is higher than the pressure of the treatment target gas having a low pressure before being supplied to the gas blow unit 21. Therefore, in the first recycle line 61 and the second recycle line 62, a flow of gas from the regenerator discharge line 15 toward the treatment target gas line 11 is generated due to the pressure difference between the regenerator discharge gas and the treatment target gas. As a result, the regenerator discharge gas can be stably flowed from the regenerator discharge line 15 to the treatment target gas line 11 by the first recycle line 61 and the second recycle line 62 without preparing another device such as a pump in the recycle line 60.

### <Second Embodiment>

Next, a carbon dioxide recovery system 1A according to a second embodiment of the present disclosure will be described. In the second embodiment described below, the same reference numerals are given to the configurations common to the first embodiment, and the description thereof will be omitted. In the second embodiment, the configuration of a recycle unit 70A in the carbon dioxide recovery system 1A is different from that in the first embodiment.

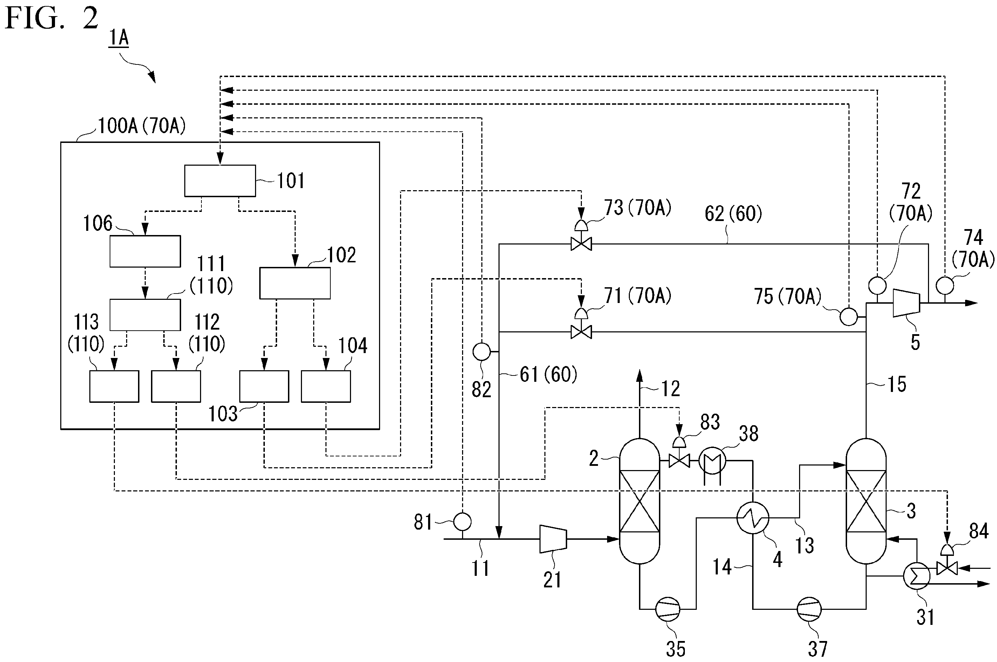

The carbon dioxide recovery system 1A of the second embodiment adjusts the amount of carbon dioxide supplied to the absorber 2 according to the amount of carbon dioxide contained in the regenerator discharge gas supplied from the recycle line 60. As shown in FIG. 2, the carbon dioxide recovery system 1A of the second embodiment further includes a treatment target gas information detection unit 81, a regenerator discharge gas information detection unit 82, a recovery line valve 83, and a steam supply valve 84.

The treatment target gas information detection unit 81 detects information on the treatment target gas flowing through the treatment target gas line 11. The treatment target gas information detection unit 81 is installed in the treatment target gas line 11 at a position upstream of a connection position between the first recycle line 61 and the treatment target gas line 11. The treatment target gas information detection unit 81 measures the flow rate of the treatment target gas flowing through the treatment target gas line 11 and the concentration of carbon dioxide in the treatment target gas flowing through the treatment target gas line 11. The treatment target gas information detection unit 81 outputs the measured information on the amount of the treatment target gas and the concentration of carbon dioxide to a control unit 100A.

The regenerator discharge gas information detection unit 82 detects information on the regenerator discharge gas flowing through the recycle line 60. The regenerator discharge gas information detection unit 82 is installed in the first recycle line 61 at a position downstream of a connection position between the first recycle line 61 and the second recycle line 62. The regenerator discharge gas information detection unit 82 measures the flow rate of the regenerator discharge gas flowing through the first recycle line 61 after merging with the second recycle line 62 and the concentration of carbon dioxide in the regenerator discharge gas flowing through the first recycle line 61 after merging with the second recycle line 62. The regenerator discharge gas information detection unit 82 outputs the measured information on the amount of the regenerator discharge gas and the concentration of carbon dioxide to the control unit 100A.

The recovery line valve 83 can adjust the supply amount of the absorption liquid from the regenerator 3 to the absorber 2. The recovery line valve 83 is installed in the lean line 14. The recovery line valve 83 is installed in the lean line 14 between the cooler 38 and the absorber 2. That is, the recovery line valve 83 adjusts the supply amount of the absorption liquid cooled by the absorption liquid heat exchanger 4 and the cooler 38 to the absorber 2. The recovery line valve 83 of the present embodiment is a control valve of which the opening degree is controlled by the control unit 100A.

The steam supply valve 84 can adjust the supply amount of steam to the reboiler 31. That is, the steam supply valve 84 can adjust the heating amount of the absorption liquid by changing the amount of the high-temperature steam supplied to the reboiler 31. The steam supply valve 84 of the present embodiment is a control valve of which the opening degree is controlled by the control unit 100A.

Further, in the recycle unit 70A of the second embodiment, the configuration of the control unit 100A is also different from that of the first embodiment. The control unit 100A of the second embodiment further includes a recovery amount detection unit 106 and a carbon dioxide amount adjustment unit 110.

The recovery amount detection unit 106 detects information on the amount of carbon dioxide contained in the gas flowing through the treatment target gas line 11. Here, the gas flowing through the treatment target gas line 11 is not only the treatment target gas but also all the gases that flow through the treatment target gas line 11 including the regenerator discharge gas that has merged in the treatment target gas line 11 and are supplied to the absorber 2. The recovery amount detection unit 106 of the present embodiment detects information on the amount of carbon dioxide contained in the gas flowing through the treatment target gas line 11 from the information detected by the treatment target gas information detection unit 81 and the information detected by the regenerator discharge gas information detection unit 82. Specifically, the recovery amount detection unit 106 receives, via the input unit 101, the information on the flow rate of the treatment target gas and the information on the concentration of carbon dioxide in the treatment target gas from the treatment target gas information detection unit 81. The recovery amount detection unit 106 detects information on the amount of carbon dioxide contained in the treatment target gas based on the product of the detected flow rate of the treatment target gas and the detected concentration of carbon dioxide in the treatment target gas. In addition, the recovery amount detection unit 106 receives, via the input unit 101, the information on the flow rate of the regenerator discharge gas and the information on the concentration of carbon dioxide in the regenerator discharge gas from the regenerator discharge gas information detection unit 82. The recovery amount detection unit 106 detects information on the amount of carbon dioxide contained in the regenerator discharge gas based on the product of the detected flow rate of the regenerator discharge gas and the detected concentration of carbon dioxide in the regenerator discharge gas. Then, the recovery amount detection unit 106 detects information on the total amount of carbon dioxide (total amount information) contained in the gas flowing through the treatment target gas line 11 based on the sum of the amount of carbon dioxide contained in the treatment target gas and the amount of carbon dioxide contained in the regenerator discharge gas. The recovery amount detection unit 106 outputs the detected information on the total amount of carbon dioxide (total amount information) contained in the gas flowing through the treatment target gas line 11 to the carbon dioxide amount adjustment unit 110.

The carbon dioxide amount adjustment unit 110 adjusts the amount of carbon dioxide to be treated in the absorber 2 when the amount of carbon dioxide contained in the gas detected by the recovery amount detection unit 106 exceeds a predetermined amount reference. Here, the amount reference is a value determined in advance and is the amount of carbon dioxide that can be absorbed by the absorber 2. The amount reference is, for example, a value determined from the apparatus design conditions or a value determined from the operating state quantity of the carbon dioxide recovery system 1. That is, when the amount reference is exceeded, even if the gas is supplied to the absorber 2, the carbon dioxide in the gas cannot be sufficiently absorbed, and there is a possibility that the absorber 2 may fail or a large amount of carbon dioxide may remain in the absorber discharge gas.

The carbon dioxide amount adjustment unit 110 of the second embodiment adjusts the amount of carbon dioxide flowing through the treatment target gas line 11 by controlling the opening degrees of the recovery line valve 83 and the steam supply valve 84. The carbon dioxide amount adjustment unit 110 controls the opening degrees of the recovery line valve 83 and the steam supply valve 84 to increase the opening degrees when the total amount of carbon dioxide contained in the gas detected by the recovery amount detection unit 106 exceeds the amount reference. In addition, the carbon dioxide amount adjustment unit 110 controls the opening degrees of the recovery line valve 83 and the steam supply valve 84 to decrease the opening degrees when the total amount of carbon dioxide contained in the gas detected by the recovery amount detection unit 106 falls below the amount reference. The carbon dioxide amount adjustment unit 110 of the present embodiment includes an amount determination unit 111, a recovery control unit 112, and a steam control unit 113.

The amount determination unit 111 determines the information input from the recovery amount detection unit 106. The amount determination unit 111 of the present embodiment determines whether or not the value of the total amount information exceeds the amount reference. In a case where the value of the total amount information exceeds the amount reference, the amount determination unit 111 sends a signal to increase the opening degree of the recovery line valve 83 to the recovery control unit 112. In addition, when the value of the total amount information exceeds the amount reference, the amount determination unit 111 sends a signal to increase the opening degree of the steam supply valve 84 to the steam control unit 113. In addition, when the value of the total amount information falls below the amount reference, the amount determination unit 111 sends a signal to decrease the opening degree of the recovery line valve 83 to the recovery control unit 112. In a case where the value of the total amount information falls below the amount reference, the amount determination unit 111 sends a signal to decrease the opening degree of the steam supply valve 84 to the steam control unit 113.

The recovery control unit 112 controls the opening degree of the recovery line valve 83 based on the signal from the amount determination unit 111. In a case where the recovery control unit 112 receives a determination result from the amount determination unit 111 that the value of the total amount information exceeds the amount reference, the recovery control unit 112 increases the opening degree of the recovery line valve 83. In a case where the recovery control unit 112 receives a determination result from the amount determination unit 111 that the value of the total amount information falls below the amount reference, the recovery control unit 112 decreases the opening degree of the recovery line valve 83.

The steam control unit 113 controls the opening degree of the steam supply valve 84 based on the signal from the amount determination unit 111. In a case where the steam control unit 113 receives a determination result from the amount determination unit 111 that the value of the total amount information exceeds the amount reference, the steam control unit 113 increases the opening degree of the steam supply valve 84. In a case where the steam control unit 113 receives a determination result from the amount determination unit 111 that the value of the total amount information falls below the amount reference, the steam control unit 113 decreases the opening degree of the steam supply valve 84.

### (Action and Effect)

In the carbon dioxide recovery system 1A having the above-described configuration, the recovery amount detection unit 106 detects information on the amount of carbon dioxide contained in the gas flowing through the treatment target gas line 11. Therefore, the treatment target gas and the regenerator discharge gas are mixed via the first recycle line 61 and the second recycle line 62, and the amount of carbon dioxide contained in the gas finally flowing through the treatment target gas line 11 can be ascertained. Further, when the amount of carbon dioxide contained in these gases exceeds the amount reference, the carbon dioxide amount adjustment unit 110 adjusts the amount of carbon dioxide to be treated in the absorber 2. Therefore, it is possible to prevent the carbon dioxide from being insufficiently treated in the absorber 2 with respect to the amount of carbon dioxide in the gas flowing through the treatment target gas line 11. Therefore, it is possible to suppress a state in which a large amount of carbon dioxide is contained in the absorber discharge gas due to the insufficient treatment of the amount of carbon dioxide in the absorber 2. That is, it is possible to suppress a decrease in the recovery rate of carbon dioxide in the absorber 2. As a result, it is possible to suppress the discharge amount of the gas containing carbon dioxide from the absorber 2 to the outside.

In addition, the treatment target gas information detection unit 81 detects information on the flow rate of the treatment target gas flowing through the treatment target gas line 11 and information on the concentration of carbon dioxide in the treatment target gas. As a result, it is possible to detect information on the amount and the concentration of carbon dioxide only in the treatment target gas that has flowed through the treatment target gas line 11 without passing through the recycle line 60. By ascertaining the amount of the treatment target gas and the concentration of carbon dioxide, the amount of carbon dioxide contained in the treatment target gas can be ascertained with high accuracy. Further, the regenerator discharge gas information detection unit 82 detects information on the flow rate of the regenerator discharge gas flowing through the recycle line 60 and information on the concentration of carbon dioxide in the regenerator discharge gas. As a result, it is possible to detect information on the amount and the concentration of carbon dioxide only in the regenerator discharge gas that has flowed through the recycle line 60 before merging with the treatment target gas line 11. By ascertaining the amount of the regenerator discharge gas and the concentration of carbon dioxide, the amount of carbon dioxide contained in the regenerator discharge gas can be ascertained with high accuracy. Then, the recovery amount detection unit 106 can detect information on the total amount of carbon dioxide contained in the gas flowing through the treatment target gas line 11 from the information obtained by the treatment target gas information detection unit 81 and the information obtained by the regenerator discharge gas information detection unit 82. In this way, by separately detecting information on the amount of carbon dioxide contained in the gas in the treatment target gas line 11 and the recycle line 60, the amount of carbon dioxide supplied in the absorber 2 can be ascertained with high accuracy. Therefore, it is possible to effectively suppress a decrease in the recovery rate of carbon dioxide in the absorber 2. As a result, it is possible to further suppress the discharge amount of the gas containing carbon dioxide from the absorber 2 to the outside.

Further, the opening degree of the recovery line valve 83 that adjusts the supply amount of the lean liquid to the absorber 2 via the lean line 14 is adjusted by the carbon dioxide amount adjustment unit 110 according to the total amount of carbon dioxide contained in the gas detected by the recovery amount detection unit 106. Further, the opening degree of the steam supply valve 84 that can adjust the supply amount of steam to the reboiler 31 is also adjusted by the carbon dioxide amount adjustment unit 110 according to the total amount of carbon dioxide contained in the gas detected by the recovery amount detection unit 106. Specifically, when the total amount of carbon dioxide exceeds the amount reference, the opening degrees of the recovery line valve 83 and the steam supply valve 84 are increased. By increasing the opening degree of the steam supply valve 84, the heating amount in the reboiler 31 is increased, and the amount of the lean liquid generated in the regenerator 3 is increased. As a result, the supply amount of the lean liquid supplied from the regenerator 3 to the lean line 14 is increased. Further, by increasing the opening degree of the recovery line valve 83, the supply amount of the lean liquid itself supplied to the absorber 2 via the lean line 14 is also increased. In addition, when the total amount of carbon dioxide falls below the amount reference, the opening degrees of the recovery line valve 83 and the steam supply valve 84 are reduced. By reducing the opening degree of the steam supply valve 84, the heating amount in the reboiler 31 is reduced, and the amount of the lean liquid generated in the regenerator 3 is reduced. As a result, the supply amount of the lean liquid supplied from the regenerator 3 to the lean line 14 is reduced. Further, by reducing the opening degree of the recovery line valve 83, the supply amount of the lean liquid supplied to the absorber 2 via the lean line 14 is reduced. In this way, the amount of the lean liquid generated in the regenerator 3 and the supply amount of the generated lean liquid to the absorber 2 are adjusted according to the total amount of carbon dioxide flowing through the treatment target gas line 11. Therefore, a decrease in the recovery rate of carbon dioxide in the absorber 2 can be suppressed by adjusting the supply amount of the absorption liquid. As a result, it is possible to further suppress the discharge amount of the gas containing carbon dioxide from the absorber 2 to the outside.

### <Third Embodiment>

Next, a carbon dioxide recovery system 1B according to a third embodiment of the present disclosure will be described. In the third embodiment described below, the same reference numerals are given to the configurations common to the first embodiment and the second embodiment in the drawings, and the description thereof will be omitted. In the third embodiment, the configuration of a recycle unit 70B in the carbon dioxide recovery system 1B is different from that in the first embodiment and the second embodiment.

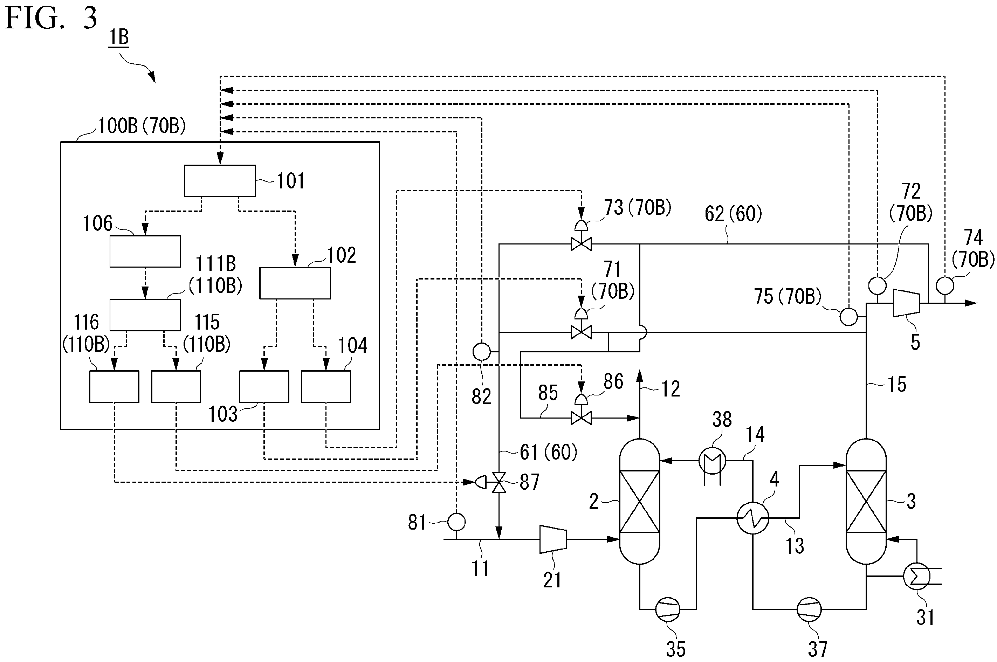

The recycle unit 70B of the carbon dioxide recovery system 1B according to the third embodiment can suppress the supply amount of the regenerator discharge gas containing a large amount of carbon dioxide to the absorber 2. As shown in FIG. 3, the recycle unit 70B according to the third embodiment further includes a bypass line 85, a first bypass valve 86, and a second bypass valve 87.

The bypass line 85 can supply the regenerator discharge gas flowing through the recycle line 60 to the absorber discharge line 12 without supplying the regenerator discharge gas to the absorber 2. The bypass line 85 connects the recycle line 60 and the absorber discharge line 12. The bypass line 85 of the present embodiment is connected to the recycle line 60 at a position upstream of the first recycle valve 71 and the second recycle valve 73. Specifically, the bypass line 85 is connected to the first recycle line 61 at a position upstream of the first recycle valve 71. In addition, the bypass line 85 is connected to the second recycle line 62 at a position upstream of the second recycle valve 73. A pipe connected to the first recycle line 61 and a pipe connected to the second recycle line 62 are merged and extend to the absorber discharge line 12.

The first bypass valve 86 can adjust the supply amount of the regenerator discharge gas from the recycle line 60 to the absorber discharge line 12. The first bypass valve 86 is installed in the bypass line 85. That is, the first bypass valve 86 adjusts the supply amount of the regenerator discharge gas supplied from the first recycle line 61 and the second recycle line 62 to the absorber discharge line 12 without passing through the treatment target gas line 11 and the absorber 2. The first bypass valve 86 of the present embodiment is a control valve of which the opening and closing are controlled by a control unit 100B.

The second bypass valve 87 can adjust the supply amount of the regenerator discharge gas from the recycle line 60 to the treatment target gas line 11. The second bypass valve 87 is installed between the arrangement positions of the first recycle valve 71 and the second recycle valve 73 and the connection position between the treatment target gas line 11 and the recycle line 60. Specifically, the second bypass valve 87 is installed in the first recycle line 61 between the connection position between the first recycle line 61 and the second recycle line 62 and the connection position between the treatment target gas line 11 and the first recycle line 61. That is, the second bypass valve 87 adjusts the supply amount of the regenerator discharge gas to the treatment target gas line 11 at a position downstream of the first recycle valve 71 and the second recycle valve 73 in the recycle line 60. The second bypass valve 87 of the present embodiment is a control valve of which the opening and closing are controlled by the control unit 100B.

Further, a carbon dioxide amount adjustment unit 110B of the control unit 100B of the third embodiment adjusts the amount of carbon dioxide flowing through the treatment target gas line 11 by performing the opening/closing control of the first bypass valve 86 and the second bypass valve 87. The carbon dioxide amount adjustment unit 110B opens the first bypass valve 86 and closes the second bypass valve 87 when the total amount of carbon dioxide included in the gas detected by the recovery amount detection unit 106 exceeds the amount reference. In addition, the carbon dioxide amount adjustment unit 110B closes the first bypass valve 86 and opens the second bypass valve 87 when the total amount of carbon dioxide included in the gas detected by the recovery amount detection unit 106 falls below the amount reference. The carbon dioxide amount adjustment unit 110B of the third embodiment includes an amount determination unit 111B, a first bypass control unit 115, and a second bypass control unit 116.

The amount determination unit 111B of the third embodiment sends a signal to open the first bypass valve 86 to the first bypass control unit 115 when the value of the total amount information exceeds the amount reference. In addition, the amount determination unit 111B sends a signal to close the second bypass valve 87 to the second bypass control unit 116 when the value of the total amount information exceeds the amount reference. In addition, the amount determination unit 111B sends a signal to close the first bypass valve 86 to the first bypass control unit 115 when the value of the total amount information falls below the amount reference. The amount determination unit 111B sends a signal to open the second bypass valve 87 to the second bypass control unit 116 when the value of the total amount information falls below the amount reference.

The first bypass control unit 115 controls the opening degree of the first bypass valve 86 based on the signal from the amount determination unit 111B. The first bypass control unit 115 opens the first bypass valve 86 when the determination result that the value of the total amount information exceeds the amount reference is received from the amount determination unit 111B. The first bypass control unit 115 closes the first bypass valve 86 when the determination result that the value of the total amount information falls below the amount reference is received from the amount determination unit 111B.

The second bypass control unit 116 controls the opening degree of the second bypass valve 87 based on the signal from the amount determination unit 111B. The second bypass control unit 116 closes the second bypass valve 87 when the determination result that the value of the total amount information exceeds the amount reference is received from the amount determination unit 111B. The second bypass control unit 116 opens the second bypass valve 87 when the determination result that the value of the total amount information falls below the amount reference is received from the amount determination unit 111B.

### (Action and Effect)

In the carbon dioxide recovery system 1B having the above-described configuration, the first bypass valve 86 is installed in the bypass line 85 that connects the recycle line 60 and the absorber discharge line 12. Then, the first bypass valve 86 is opened and closed by the carbon dioxide amount adjustment unit 110B according to the total amount of carbon dioxide contained in the gas detected by the recovery amount detection unit 106. Specifically, the first bypass valve 86 is opened when the total amount of carbon dioxide exceeds the amount reference. By opening the first bypass valve 86, the regenerator discharge gas flowing through the first recycle line 61 and the second recycle line 62 is fed from the bypass line 85 to the absorber discharge line 12, and the amount fed to the treatment target gas line 11 is reduced. That is, the regenerator discharge gas flowing through the first recycle line 61 and the second recycle line 62 is discharged to the outside without being fed to the absorber 2. In addition, the first bypass valve 86 is closed when the total amount of carbon dioxide falls below the amount reference. By closing the first bypass valve 86, the bypass line 85 becomes non-flowable, and the regenerator discharge gas is fed to the treatment target gas line 11. That is, all the regenerator discharge gas flowing through the first recycle line 61 is fed to the absorber 2. In this way, when the total amount of carbon dioxide flowing through the treatment target gas line 11 exceeds the amount of carbon dioxide that can be absorbed by the absorber 2 and the treatment in the absorber 2 is not possible, it is possible to suppress the excessive supply of carbon dioxide to the absorber 2. Therefore, it is possible to suppress the destabilization of the treatment due to the failure of the absorber 2 caused by the excessive supply of carbon dioxide to the absorber 2. As a result, it is possible to stably suppress the amount of gas containing carbon dioxide discharged from the absorber 2 to the outside.

In addition, the second bypass valve 87 capable of adjusting the supply amount of the regenerator discharge gas from the recycle line 60 to the treatment target gas line 11 is installed in addition to the first bypass valve 86. Then, the second bypass valve 87 is also opened and closed by the carbon dioxide amount adjustment unit 110B according to the total amount of carbon dioxide contained in the gas detected by the recovery amount detection unit 106. Specifically, when the total amount of carbon dioxide exceeds the amount reference, the first bypass valve 86 is opened and the second bypass valve 87 is closed. By closing the second bypass valve 87 together with the opening of the first bypass valve 86, the flow of the regenerator discharge gas from the first recycle line 61 to the treatment target gas line 11 is completely blocked. The regenerator discharge gas flowing through the first recycle line 61 is discharged to the outside without being fed to the absorber 2 at all. In this way, when the regenerator discharge gas is supplied to the absorber discharge line 12 via the first bypass valve 86, the flow of the regenerator discharge gas to the treatment target gas line 11 is completely blocked, so that it is possible to reliably suppress the destabilization of the treatment caused by the excessive supply of carbon dioxide to the absorber 2. In addition, the first bypass valve 86 and the second bypass valve 87 are not limited to being fully opened or fully closed, and can be used as an intermediate opening degree to adjust the flow rate ratio flowing through the first recycle line 61 and the bypass line 85. As a result, it is possible to more stably suppress the amount of gas containing carbon dioxide discharged from the absorber 2 to the outside.

In addition, the bypass line 85 is connected to the absorber discharge line 12 connected to the top portion of the absorber 2. Therefore, when the regenerator discharge gas flowing through the first recycle line 61 is discharged to the outside, the regenerator discharge gas can be discharged to the outside after being mixed with the absorber discharge gas discharged from the absorber 2. That is, even when the amount of carbon dioxide contained in the regenerator discharge gas is large, the regenerator discharge gas can be discharged to the outside in a state of being diluted with the absorber discharge gas. Therefore, it is possible to suppress the direct discharge of the concentrated carbon dioxide to the outside.

In the third embodiment, as described above, the second bypass valve 87 is installed in the first recycle line 61, but the present disclosure is not limited to such a structure. For example, in the third embodiment, a structure may be adopted in which the second bypass valve 87 is not provided and only the first bypass valve 86 is provided.

### <Fourth Embodiment>

Next, a carbon dioxide recovery system 1C according to a fourth embodiment of the present disclosure will be described. In the fourth embodiment described below, the same configurations as those of the first to third embodiments will be denoted by the same reference numerals in the drawings, and the description thereof will be omitted. In the fourth embodiment, the carbon dioxide recovery system 1C is different from the first to third embodiments in the configuration for circulating the absorption liquid and the configuration of a recycle unit 70C.

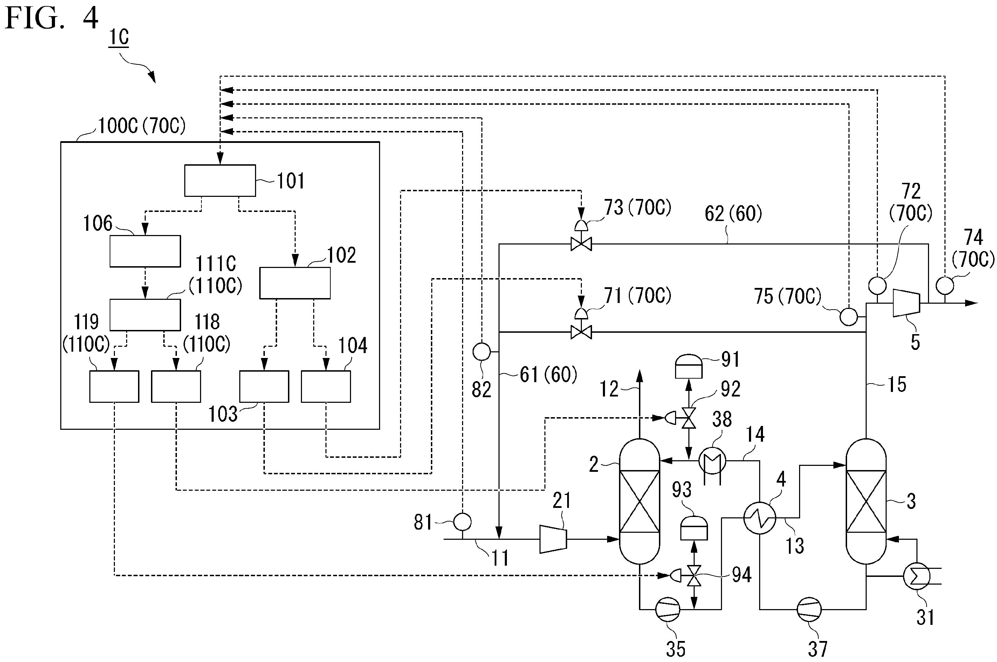

As shown in FIG. 4, the carbon dioxide recovery system 1C of the fourth embodiment further includes a lean tank 91, a lean valve 92, a rich tank 93, and a rich valve 94.

The lean tank 91 can store a lean liquid that is an absorption liquid from which carbon dioxide has been released. The lean tank 91 stores the lean liquid flowing through the lean line 14.

The lean valve 92 can adjust the supply amount of the absorption liquid between the lean tank 91 and the lean line 14. The lean valve 92 can adjust both the supply of the lean liquid from the lean tank 91 to the lean line 14 and the supply of the lean liquid from the lean line 14 to the lean tank 91. The lean valve 92 is connected to the lean line 14 between the absorber 2 and the cooler 38. That is, the lean valve 92 can transfer the lean liquid cooled by the absorption liquid heat exchanger 4 and the cooler 38 from the lean line 14 to the lean tank 91. In addition, the lean valve 92 can supply the lean liquid stored in the lean tank 91 to merge with the lean liquid flowing through the lean line 14. The lean valve 92 of the present embodiment is a control valve of which the opening degree is controlled by a control unit 100C.

The rich tank 93 can store a rich liquid that is an absorption liquid that has absorbed carbon dioxide. The rich tank 93 stores the rich liquid flowing through the rich line 13.

The rich valve 94 can adjust the supply amount of the absorption liquid between the rich tank 93 and the rich line 13. The rich valve 94 can adjust both the supply of the rich liquid from the rich tank 93 to the rich line 13 and the supply of the rich liquid from the rich line 13 to the rich tank 93. The rich valve 94 is connected to the rich line 13 between the rich pump 35 and the absorption liquid heat exchanger 4. That is, the rich valve 94 can transfer the rich liquid before being heated by the absorption liquid heat exchanger 4 from the rich line 13 to the rich tank 93. In addition, the rich valve 94 can supply the rich liquid stored in the rich tank 93 to merge with the rich liquid flowing through the rich line 13. The rich valve 94 of the present embodiment is a control valve of which the opening degree is controlled by the control unit 100C.

Further, a carbon dioxide amount adjustment unit 110C of the control unit 100C of the fourth embodiment adjusts the amount of the lean liquid supplied to the absorber 2 by performing the opening degree control of the lean valve 92 and the rich valve 94. As a result, the carbon dioxide amount adjustment unit 110C of the fourth embodiment increases the amount of the lean liquid supplied to the absorber 2 to increase the amount of carbon dioxide treated in the absorber 2. In this case, the carbon dioxide amount adjustment unit 110C changes the amounts of the lean liquid and the rich liquid such that the total amount of the absorption liquid flowing through the lean line 14 and the rich line 13 between the absorber 2 and the regenerator 3 is kept constant. In a case where the total amount of carbon dioxide contained in the gas detected by the recovery amount detection unit 106 exceeds the amount reference, the carbon dioxide amount adjustment unit 110C increases the supply amount of the absorption liquid from the lean tank 91 to the lean line 14 by the lean valve 92 and increases the supply amount of the absorption liquid from the rich line 13 to the rich tank 93 by the rich valve 94. In addition, when the total amount of carbon dioxide contained in the gas detected by the recovery amount detection unit 106 falls below the amount reference, the carbon dioxide amount adjustment unit 110C increases the supply amount of the absorption liquid from the rich tank 93 to the rich line 13 by the rich valve 94 and increases the supply amount of the absorption liquid from the lean line 14 to the lean tank 91 by the lean valve 92. The carbon dioxide amount adjustment unit 110C of the third embodiment includes an amount determination unit 111C, a lean control unit 118, and a rich control unit 119.

In a case where the value of the total amount information exceeds the amount reference, the amount determination unit 111C of the third embodiment sends a signal to the lean control unit 118 to adjust the lean valve 92 such that the absorption liquid is released from the lean tank 91 to the lean line 14. In addition, when the value of the total amount information exceeds the amount reference, the amount determination unit 111C sends a signal to the rich control unit 119 to adjust the rich valve 94 such that the absorption liquid is stored in the rich tank 93 from the rich line 13. In this case, the amount determination unit 111C sends a signal to adjust the lean valve 92 and the rich valve 94 such that the release amount of the lean liquid from the lean tank 91 to the lean line 14 and the storage amount of the rich liquid from the rich line 13 to the rich tank 93 are the same. In addition, when the value of the total amount information falls below the amount reference, the amount determination unit 111C sends a signal to the lean control unit 118 to adjust the lean valve 92 such that the absorption liquid is stored in the lean tank 91 from the lean line 14. In a case where the value of the total amount information falls below the amount reference, the amount determination unit 111C sends a signal to the rich control unit 119 to adjust the rich valve 94 such that the absorption liquid is released from the rich tank 93 to the rich line 13. In this case, the amount determination unit 111C sends a signal to adjust the lean valve 92 and the rich valve 94 such that the storage amount of the lean liquid from the lean line 14 to the lean tank 91 and the release amount of the rich liquid from the rich tank to the rich line 13 are the same.

The lean control unit 118 controls the supply state of the lean liquid by the lean valve 92 based on the signal from the amount determination unit 111C. In a case where the lean control unit 118 receives a determination result from the amount determination unit 111C that the value of the total amount information exceeds the amount reference, the lean control unit 118 adjusts the lean valve 92 such that the absorption liquid is supplied from the lean tank 91 to the lean line 14. In a case where the lean control unit 118 receives a determination result from the amount determination unit 111C that the value of the total amount information falls below the amount reference, the lean control unit 118 adjusts the lean valve 92 such that the absorption liquid is supplied from the lean line 14 to the lean tank 91.

The rich control unit 119 controls the supply state of the rich liquid by the rich valve 94 based on the signal from the amount determination unit 111C. In a case where the rich control unit 119 receives a determination result from the amount determination unit 111C that the value of the total amount information exceeds the amount reference, the rich control unit 119 adjusts the rich valve 94 such that the absorption liquid is supplied from the rich line 13 to the rich tank 93. In a case where the rich control unit 119 receives a determination result from the amount determination unit 111C that the value of the total amount information falls below the amount reference, the rich control unit 119 adjusts the rich valve 94 such that the absorption liquid is supplied from the rich tank 93 to the rich line 13.

### (Action and Effect)

In the carbon dioxide recovery system 1C having the above-described configuration, the lean tank 91 capable of storing the lean liquid and the lean valve 92 capable of adjusting the supply amount of the lean liquid between the lean tank 91 and the lean line 14 are installed. Therefore, the lean liquid flowing through the lean line 14 can be stored in the lean tank 91, or the lean liquid stored in the lean tank 91 can be supplied to the lean line 14. In addition, the rich tank 93 capable of storing the rich liquid and the rich valve 94 capable of adjusting the supply amount of the rich liquid between the rich tank 93 and the rich line 13 are installed. Therefore, the rich liquid flowing through the rich line 13 can be stored in the rich tank 93, or the rich liquid stored in the rich tank 93 can be supplied to the rich line 13. The lean tank 91 and the rich tank 93 keep the total amount of the absorption liquid flowing through the lean line 14 and the rich line 13 constant.

In addition, the supply state of the absorption liquid by the lean valve 92 and the rich valve 94 is adjusted by the carbon dioxide amount adjustment unit 110C according to the total amount of carbon dioxide contained in the gas detected by the recovery amount detection unit 106. Specifically, when the total amount of carbon dioxide exceeds the amount reference, the supply amount of the absorption liquid from the lean tank 91 to the lean line 14 is increased by the lean valve 92, and the supply amount of the absorption liquid from the rich line 13 to the rich tank 93 is increased by the rich valve 94. That is, the proportion of the lean liquid in the absorption liquid circulating through the lean line 14 and the rich line 13 can be increased. As a result, the amount of the lean liquid supplied to the absorber 2 can be increased, and the amount of carbon dioxide treated in the absorber 2 can be increased. In addition, when the total amount of carbon dioxide falls below the amount reference, the supply amount of the absorption liquid from the rich tank 93 to the rich line 13 is increased by the rich valve 94, and the supply amount of the absorption liquid from the lean line 14 to the lean tank 91 is increased by the lean valve 92. That is, the proportion of the rich liquid in the absorption liquid circulating through the lean line 14 and the rich line 13 can be increased. As a result, the amount of the lean liquid supplied to the absorber 2 can be reduced, and the amount of carbon dioxide treated in the absorber 2 can be reduced. In this way, the supply amount of the lean liquid supplied to the absorber 2 is adjusted according to the total amount of carbon dioxide supplied to the absorber 2. Therefore, a decrease in the recovery rate of carbon dioxide in the absorber 2 can be suppressed by adjusting the supply amount of the absorption liquid. As a result, it is possible to further suppress the discharge amount of the gas containing carbon dioxide from the absorber 2 to the outside.

### <Fifth Embodiment>

Next, a carbon dioxide recovery system 1D according to a fifth embodiment of the present disclosure will be described. In the fifth embodiment described below, the same reference numerals will be assigned to the configurations common to the first to fourth embodiments in the drawings, and the description thereof will be omitted. In the fifth embodiment, the control of the first recycle valve 71 and the second recycle valve 73 by a control unit 100D is different from that in the first to fourth embodiments.

The control unit 100D of the carbon dioxide recovery system 1D of the fourth embodiment estimates the flow state of the regenerator discharge gas flowing through the regenerator discharge line 15 and controls the first recycle valve 71 and the second recycle valve 73. The control unit 100D opens the first recycle valve 71 and the second recycle valve 73 when it is estimated that a predetermined condition under which the flow state of the regenerator discharge gas flowing through the regenerator discharge line 15 is considered to have changed rapidly is satisfied. In addition, the control unit 100D closes the first recycle valve 71 and the second recycle valve 73 when it is estimated that the condition is not satisfied. In the fifth embodiment, the information on the operating state of the discharge compressor 5 is detected to estimate the flow state of the regenerator discharge gas flowing through the regenerator discharge line 15.

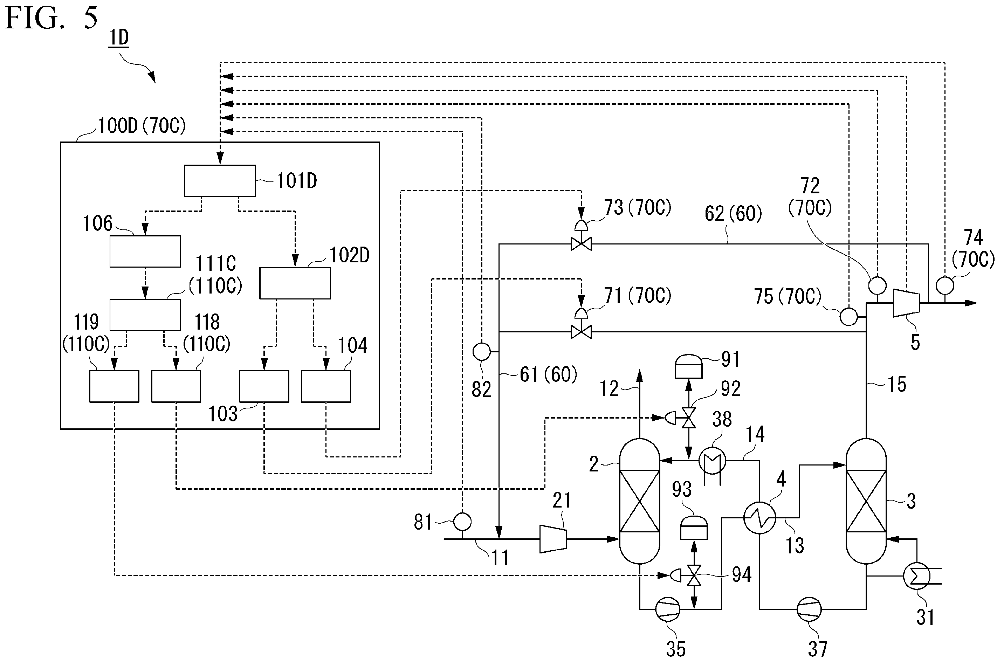

In the fifth embodiment, as shown in FIG. 5, in the control unit 100D, when the discharge compressor 5 stops the operation, a stop signal of the discharge compressor 5 is input to an input unit 101D. The input unit 101D outputs information indicating that the stop signal of the discharge compressor 5 is detected to a determination unit 102D. The determination unit 102D determines that the flow state of the regenerator discharge gas flowing through the regenerator discharge line 15 satisfies the predetermined condition when the information indicating that the stop signal is detected is input. In addition, the determination unit 102D determines that the flow state of the regenerator discharge gas flowing through the regenerator discharge line 15 does not satisfy the predetermined condition when a predetermined time elapses after the information indicating that the stop signal is detected is input.

Here, the predetermined condition is a condition under which the flow rate, the pressure, or the concentration of the regenerator discharge gas discharged from the regenerator 3 or the discharge compressor 5 is considered to change rapidly such that the regenerator discharge gas cannot be recovered or discharged at the transfer destination to which the regenerator discharge line 15 is connected. For example, when this condition is satisfied, the flow rate, the pressure, or the concentration of the regenerator discharge gas flowing through the regenerator discharge line 15 is in a state of rapidly increasing.

In addition, the predetermined time is a time under which the flow state of the regenerator discharge gas that has changed rapidly is considered to return to an allowable range. That is, after the predetermined time elapses, the flow rate, the pressure, or the concentration of the regenerator discharge gas flowing through the regenerator discharge line 15 is in a state in which the flow rate, the pressure, or the concentration can be handled in the normal operation.

In a case where the determination unit 102D determines that the condition is satisfied, the determination unit 102D sends a signal to rapidly open the first recycle valve 71 to the first valve control unit 103 and sends a signal to rapidly open the second recycle valve 73 to the second valve control unit 104. That is, the determination unit 102D sends a signal to immediately fully open the first recycle valve 71 and the second recycle valve 73. In a case where the determination unit 102D determines that the condition is not satisfied, the determination unit 102D sends a signal to close the first recycle valve 71 to the first valve control unit 103 and sends a signal to close the second recycle valve 73 to the second valve control unit 104.

### (Action and Effect)

In the carbon dioxide recovery system 1D having the above-described configuration, the stop signal of the discharge compressor 5 is input, so that it is possible to ascertain that the flow state of the regenerator discharge gas flowing through the regenerator discharge line 15 satisfies the condition. That is, in an emergency such as an emergency stop due to a failure of the discharge compressor 5, it is possible to appropriately ascertain when the flow rate, the pressure, or the concentration of the regenerator discharge gas flowing through the regenerator discharge line 15 changes rapidly. Further, when the flow state of the regenerator discharge gas satisfies the condition, the first recycle valve 71 and the second recycle valve 73 are immediately fully opened. Therefore, when the flow state of the regenerator discharge gas in the regenerator discharge line 15 changes rapidly, the regenerator discharge gas discharged from the regenerator 3 can be fed to the absorber 2 and recycled without being discharged to the outside. Therefore, the discharge amount of the gas containing carbon dioxide can be suppressed to the outside in response to the rapid change in the flow state of the regenerator discharge gas discharged from the regenerator 3.

In the control unit 100D of the fifth embodiment, the determination unit 102D is not limited to determining that the flow state of the regenerator discharge gas satisfies the condition only with the stop signal when the operation of the discharge compressor 5 is stopped. In the control unit 100D, another signal may be input, in which estimation can be made that the flow state of the regenerator discharge gas changes rapidly. For example, a signal for notifying of a supply failure of the steam to the reboiler 31 or a signal for notifying of a stop of the supply source of the treatment target gas may be input to the control unit 100D.

In addition, in the control unit 100D of the fifth embodiment, when the flow state of the regenerator discharge gas satisfies the condition, only the first recycle valve 71 and the second recycle valve 73 are controlled, but the present disclosure is not limited to such a configuration. For example, when the flow state of the regenerator discharge gas satisfies the condition, the control unit 100D may further control the supply state of the absorption liquid by the lean valve 92 and the rich valve 94 in addition to the control of the first recycle valve 71 and the second recycle valve 73. In this way, when the flow state of the regenerator discharge gas satisfies the condition, the lean valve 92 and the rich valve 94 are also controlled, so that even when the regenerator discharge gas rapidly fed via the recycle line 60 is fed to the absorber 2, a decrease in the recovery rate of carbon dioxide in the absorber 2 can be suppressed by adjusting the supply amount of the absorption liquid. As a result, it is possible to further suppress the discharge amount of the gas containing carbon dioxide from the absorber 2 to the outside.

### (Other Embodiments)

The embodiments of the present disclosure have been described in detail with reference to the drawings, but the specific configuration is not limited to the embodiment, and design changes and the like within the concept of the present disclosure are also included.

The configurations of the first embodiment to the fifth embodiment may be combined in various ways. Therefore, for example, the configuration of the third embodiment may be further combined with the configuration of the second embodiment. In addition, the configuration of the fourth embodiment may be combined with the second embodiment and the third embodiment. Further, the configurations of the second embodiment to the fourth embodiment may be further combined with the configuration of the fifth embodiment.

In addition, the first recycle line 61 and the second recycle line 62 are not limited to the configuration connected to the treatment target gas line 11 upstream of the gas blow unit 21 as in the present embodiment. For example, the first recycle line 61 and the second recycle line 62 may be connected to the treatment target gas line 11 downstream of the gas blow unit 21. That is, the first recycle line 61 and the second recycle line 62 may merge the regenerator discharge gas with the treatment target gas after the pressure increase by the gas blow unit 21. In addition, the second recycle line 62 is not limited to the configuration connected to the first recycle line 61. The second recycle line 62 may be configured to be directly connected to the treatment target gas line 11 separately from the first recycle line 61.

In addition, the discharge concentration detection unit 75 is not limited to the configuration of the concentration meter installed in the regenerator discharge line 15 between the regenerator 3 and the discharge compressor 5. The discharge concentration detection unit 75 may be installed in the regenerator discharge line 15. Therefore, the discharge concentration detection unit 75 may be installed in the regenerator discharge line 15 downstream of the discharge compressor 5. In addition, the discharge concentration detection unit 75 is not limited to a single concentration meter. The discharge concentration detection unit 75 may detect information on the concentration of carbon dioxide in the regenerator discharge gas. Therefore, the discharge concentration detection unit 75 may be a sensor integrated with the first pressure detection unit 72 or the second pressure detection unit 74.

In addition, in the present embodiment, the control units 100, 100A, 100B, 100C, and 100D open the first recycle valve 71 when the concentration value detected by the discharge concentration detection unit 75 falls below the concentration reference, but the present disclosure is not limited to such a configuration. The control units 100, 100A, 100B, 100C, and 100D may open at least one of the first recycle valve 71 and the second recycle valve 73 when the concentration value falls below the concentration reference. Therefore, the control units 100, 100A, 100B, 100C, and 100D may open the second recycle valve 73 when the concentration value falls below the concentration reference, or may open both the first recycle valve 71 and the second recycle valve 73.

In addition, in the second to fifth embodiments, a gas information detection unit that collectively detects information on the gas flowing through the treatment target gas line 11 may be provided instead of the treatment target gas information detection unit 81 and the regenerator discharge gas information detection unit 82. Such a gas information detection unit may be installed, for example, in the treatment target gas line 11 between the gas blow unit 21 and the absorber 2. As a result, the gas information detection unit can measure the flow rate of the gas flowing through the treatment target gas line 11 and the information on the concentration of carbon dioxide in the gas.

In addition, in the second to fifth embodiments, the recovery amount detection unit 106 is not limited to detecting information on the amount of carbon dioxide contained in the gas flowing through the treatment target gas line 11 from the information detected by the treatment target gas information detection unit 81 and the information detected by the regenerator discharge gas information detection unit 82. The recovery amount detection unit 106 may have any configuration as long as it can detect information on the amount of carbon dioxide contained in the gas flowing through the treatment target gas line 11. For example, the recovery amount detection unit 106 may estimate and detect information on the amount of carbon dioxide contained in the gas flowing through the treatment target gas line 11 based on information on the operating states of the carbon dioxide recovery systems 1, 1A, 1B, 1C, and 1D and the surrounding equipment, the opening degrees of various valves, the pressure of the gas, the temperature of the gas, and the like, without directly measuring the flow rate or concentration of the gas. By estimating the information on the amount of carbon dioxide flowing through the treatment target gas line 11 by such a method, it is possible to reduce the cost of installing sensors and the like.

In addition, the treatment target gas line 11 is not limited to a configuration in which only the recycle line 60 is connected. For example, a line capable of supplying a gas having a low concentration of carbon dioxide may be connected to the treatment target gas line 11 separately from the recycle line 60.

### <Supplementary Note>

The carbon dioxide recovery systems 1, 1A, 1B, 1C, and 1D described in each embodiment are understood as follows, for example.

(1) A carbon dioxide recovery system 1, 1A, 1B, 1C, 1D according to a first aspect includes: an absorber 2 configured to bring a treatment target gas containing carbon dioxide into contact with an absorption liquid and discharge the absorption liquid absorbing the carbon dioxide and an absorber discharge gas containing the treatment target gas from which the carbon dioxide is removed; a regenerator 3 configured to release the carbon dioxide from the absorption liquid discharged from the absorber 2 and discharge the absorption liquid from which the carbon dioxide is released and a regenerator discharge gas containing the carbon dioxide; a treatment target gas line 11 configured to introduce the treatment target gas into the absorber 2; a regenerator discharge line 15 configured to discharge the regenerator discharge gas discharged from the regenerator 3 to the outside; a discharge compressor 5 configured to compress the regenerator discharge gas, the discharge compressor 5 being installed in the regenerator discharge line 15; a recycle line 60 configured to connect the regenerator discharge line 15 and the treatment target gas line 11; and a recycle unit 70, 70A, 70B, 70C configured to adjust a supply amount of the regenerator discharge gas supplied from the regenerator discharge line 15 to the treatment target gas line 11 through the recycle line 60, in which the recycle unit 70, 70A, 70B, 70C includes a first recycle line 61 configured to supply at least a part of the regenerator discharge gas before being compressed by the discharge compressor 5 to the treatment target gas line 11, the first recycle line 61 being connected to the regenerator discharge line 15 between the regenerator 3 and the discharge compressor 5, and a second recycle line 62 configured to supply at least a part of the regenerator discharge gas compressed by the discharge compressor 5 to the treatment target gas line 11, the recycle unit 70, 70A, 70B, 70C further includes a first recycle valve 71 configured to adjust the supply amount of the regenerator discharge gas from the regenerator discharge line 15 to the treatment target gas line 11, the first recycle valve 71 being installed in the first recycle line 61, a first pressure detection unit 72 configured to detect information on a pressure of the regenerator discharge gas flowing through the regenerator discharge line 15 between the regenerator 3 and the discharge compressor 5, a second recycle valve 73 configured to adjust the supply amount of the regenerator discharge gas from the regenerator discharge line 15 to the treatment target gas line 11, the second recycle valve 73 being installed in the second recycle line 62, a second pressure detection unit 74 configured to detect information on a pressure of the regenerator discharge gas compressed by the discharge compressor 5 and flowing through the regenerator discharge line 15, and a control unit 100, 100A, 100B, 100C, 100D configured to control opening degrees of the first recycle valve 71 and the second recycle valve 73, and the control unit 100, 100A, 100B, 100C, 100D is configured to open the first recycle valve 71 when the pressure detected by the first pressure detection unit 72 exceeds a predetermined pressure reference and close the first recycle valve 71 when the pressure detected by the first pressure detection unit 72 falls below the pressure reference, and open the second recycle valve 73 when the pressure detected by the second pressure detection unit 74 exceeds the pressure reference and close the second recycle valve 73 when the pressure detected by the second pressure detection unit 74 falls below the pressure reference.

According to such a configuration, the pressure of the regenerator discharge gas flowing through the regenerator discharge line 15 is detected by the first pressure detection unit 72 and the second pressure detection unit 74 at each of positions upstream and downstream of the discharge compressor 5. Then, the first recycle valve 71 and the second recycle valve 73 are opened and closed based on the results from the first pressure detection unit 72 and the second pressure detection unit 74. Therefore, when the pressure of the regenerator discharge gas immediately after being discharged from the regenerator 3 is high, the regenerator discharge gas can be fed from the first recycle line 61 to the treatment target gas line 11. In addition, when the pressure of the regenerator discharge gas immediately after being discharged from the regenerator 3 is low, the regenerator discharge gas can be fed from the second recycle line 62 to the treatment target gas line 11 after being compressed by the discharge compressor 5. In this way, regardless of the pressure of the regenerator discharge gas immediately after being discharged from the regenerator 3, the regenerator discharge gas having a pressure that can be used in the absorber 2 can be fed to the treatment target gas line 11. Therefore, most of the regenerator discharge gas discharged from the regenerator 3 can be fed to the absorber 2 and recycled. As a result, the amount of carbon dioxide returned from the regenerator 3 to the absorber 2 is adjusted, and the discharge amount to the outside is suppressed.

(2) A carbon dioxide recovery system 1, 1A, 1B, 1C, 1D according to a second aspect is the carbon dioxide recovery system 1, 1A, 1B, 1C, 1D according to (1), in which the recycle unit 70, 70A, 70B, 70C further includes a discharge concentration detection unit 75 configured to detect information on a concentration of the carbon dioxide in the regenerator discharge gas flowing through the regenerator discharge line 15, and the control unit 100, 100A, 100B, 100C, 100D is configured to control the first recycle valve 71 and the second recycle valve 73 such that at least one of the first recycle valve 71 and the second recycle valve 73 is opened when the concentration detected by the discharge concentration detection unit 75 falls below a predetermined concentration reference.

According to such a configuration, when the concentration of carbon dioxide in the regenerator discharge gas discharged from the regenerator 3 is too low to be suitable for supply to the transfer destination, the regenerator discharge gas is fed to the treatment target gas line 11 through at least one of the first recycle line 61 and the second recycle valve 73. Therefore, even the regenerator discharge gas having a concentration of carbon dioxide that is not suitable for recycling is fed to the treatment target gas line 11. In this way, it is also possible to suppress the discharge of the regenerator discharge gas having a concentration of carbon dioxide that is not suitable for supply to the transfer destination to the outside. Therefore, it is possible to suppress the discharge amount of the regenerator discharge gas to the outside regardless of the concentration of carbon dioxide.

(3) A carbon dioxide recovery system 1, 1A, 1B, 1C, 1D according to a third aspect is the carbon dioxide recovery system 1, 1A, 1B, 1C, 1D according to (1) or (2), further including: a gas blow unit 21 configured to blow the treatment target gas introduced into the absorber 2, the gas blow unit 21 being installed in the treatment target gas line 11, in which the recycle line 60 is connected to the treatment target gas line 11 such that at least a part of the regenerator discharge gas is merged with the treatment target gas before being supplied to the gas blow unit 21.

According to such a configuration, the recycle line 60 is connected to the treatment target gas line 11 at a position upstream of the gas blow unit 21. Therefore, at least a part of the regenerator discharge gas can be merged with the treatment target gas having a low pressure before being supplied to the gas blow unit 21. Here, the pressure of the regenerator discharge gas flowing through the regenerator discharge line 15 is higher than the pressure of the treatment target gas having a low pressure before being supplied to the gas blow unit 21. Therefore, in the recycle line 60, a flow of gas from the regenerator discharge line 15 toward the treatment target gas line 11 is generated due to a pressure difference between the regenerator discharge gas and the treatment target gas. As a result, the regenerator discharge gas can be stably flowed from the regenerator discharge line 15 to the treatment target gas line 11 by the recycle line 60 without preparing another device such as a pump in the recycle line 60.

(4) A carbon dioxide recovery system 1A, 1B, 1C, 1D according to a fourth aspect is the carbon dioxide recovery system 1, 1A, 1B, 1C, 1D according to any one of (1) to (3), further including: a recovery amount detection unit 106 configured to detect information on an amount of carbon dioxide contained in a gas flowing through the treatment target gas line 11; and a carbon dioxide amount adjustment unit 110, 110B, 110C configured to adjust an amount of carbon dioxide to be treated in the absorber 2 when the amount of carbon dioxide contained in the gas detected by the recovery amount detection unit 106 exceeds a predetermined amount reference.

According to such a configuration, the information on the amount of carbon dioxide contained in the gas flowing through the treatment target gas line 11 is detected by the recovery amount detection unit 106. Therefore, the amount of carbon dioxide contained in the gas finally flowing through the treatment target gas line 11 can be ascertained by mixing the treatment target gas and the regenerator discharge gas. Further, when the amount of carbon dioxide contained in these gases exceeds the amount reference, the carbon dioxide amount adjustment unit 110, 110B, or 110C adjusts the amount of carbon dioxide to be treated in the absorber 2. Therefore, it is possible to prevent the carbon dioxide from being insufficiently treated in the absorber 2 with respect to the amount of carbon dioxide in the gas flowing through the treatment target gas line 11. Therefore, it is possible to suppress a state in which a large amount of carbon dioxide is contained in the absorber discharge gas due to the insufficient treatment of the amount of carbon dioxide in the absorber 2. That is, it is possible to suppress a decrease in the recovery rate of carbon dioxide in the absorber 2. As a result, it is possible to suppress the discharge amount of the gas containing carbon dioxide from the absorber 2 to the outside.

(5) A carbon dioxide recovery system 1A, 1B, 1C, 1D according to a fifth aspect is the carbon dioxide recovery system 1A, 1B, 1C, 1D according to (4), further including: a treatment target gas information detection unit 81 configured to detect information on a flow rate of the treatment target gas flowing through the treatment target gas line 11 and information on a concentration of the carbon dioxide in the treatment target gas; and a regenerator discharge gas information detection unit 82 configured to detect information on a flow rate of the regenerator discharge gas flowing through the recycle line 60 and information on a concentration of the carbon dioxide in the regenerator discharge gas, in which the recovery amount detection unit 106 is configured to detect the information on the amount of carbon dioxide contained in the gas flowing through the treatment target gas line 11 from the information on the flow rate of the treatment target gas and the information on the concentration of the carbon dioxide in the treatment target gas detected by the treatment target gas information detection unit 81, and the information on the flow rate of the regenerator discharge gas and the information on the concentration of the carbon dioxide in the regenerator discharge gas detected by the regenerator discharge gas information detection unit 82.

According to such a configuration, the treatment target gas information detection unit 81 detects the information on the flow rate of the treatment target gas flowing through the treatment target gas line 11 and the information on the concentration of the carbon dioxide in the treatment target gas. As a result, it is possible to detect information on the amount and the concentration of carbon dioxide only in the treatment target gas that has flowed through the treatment target gas line 11 without passing through the recycle line 60. By ascertaining the amount of the treatment target gas and the concentration of carbon dioxide, the amount of carbon dioxide contained in the treatment target gas can be ascertained with high accuracy. Further, the regenerator discharge gas information detection unit 82 detects information on the flow rate of the regenerator discharge gas flowing through the recycle line 60 and information on the concentration of carbon dioxide in the regenerator discharge gas. As a result, it is possible to detect information on the amount and the concentration of carbon dioxide only in the regenerator discharge gas that has flowed through the recycle line 60 before merging with the treatment target gas line 11. By ascertaining the amount of the regenerator discharge gas and the concentration of carbon dioxide, the amount of carbon dioxide contained in the regenerator discharge gas can be ascertained with high accuracy. Then, the recovery amount detection unit 106 can detect information on the total amount of carbon dioxide contained in the gas flowing through the treatment target gas line 11 from the information obtained by the treatment target gas information detection unit 81 and the information obtained by the regenerator discharge gas information detection unit 82. In this way, by separately detecting information on the amount of carbon dioxide contained in the gas in the treatment target gas line 11 and the recycle line 60, the amount of carbon dioxide supplied in the absorber 2 can be ascertained with high accuracy. Therefore, it is possible to effectively suppress a decrease in the recovery rate of carbon dioxide in the absorber 2. As a result, it is possible to further suppress the discharge amount of the gas containing carbon dioxide from the absorber 2 to the outside.

(6) A carbon dioxide recovery system 1A according to a sixth aspect is the carbon dioxide recovery system 1A, 1B, 1C, 1D according to (4) or (5), further including: a lean line 14 configured to supply, to the absorber 2, the absorption liquid discharged from the regenerator 3 and from which the carbon dioxide is released; a reboiler 31 configured to heat the absorption liquid discharged from the regenerator 3 by exchanging heat with steam; a recovery line valve 83 configured to adjust a supply amount of the absorption liquid from the regenerator 3 to the absorber 2, the recovery line valve 83 being installed in the lean line 14; and a steam supply valve 84 configured to adjust a supply amount of the steam to the reboiler 31, in which the carbon dioxide amount adjustment unit 110, 110B, 110C is configured to control the recovery line valve 83 and the steam supply valve 84 such that opening degrees of the recovery line valve 83 and the steam supply valve 84 are increased when the amount of carbon dioxide contained in the gas detected by the recovery amount detection unit 106 exceeds the amount reference, and such that the opening degrees of the recovery line valve 83 and the steam supply valve 84 are decreased when the amount of carbon dioxide falls below the amount reference.

According to such a configuration, when the amount of carbon dioxide exceeds the amount reference, the opening degrees of the recovery line valve 83 and the steam supply valve 84 are increased. By increasing the opening degree of the steam supply valve 84, the heating amount in the reboiler 31 is increased, and the amount of the lean liquid generated in the regenerator 3 is increased. As a result, the supply amount of the lean liquid supplied from the regenerator 3 to the lean line 14 is increased. Further, by increasing the opening degree of the recovery line valve 83, the supply amount of the lean liquid itself supplied to the absorber 2 via the lean line 14 is also increased. In addition, when the amount of carbon dioxide falls below the amount reference, the opening degrees of the recovery line valve 83 and the steam supply valve 84 are decreased. By reducing the opening degree of the steam supply valve 84, the heating amount in the reboiler 31 is reduced, and the amount of the lean liquid generated in the regenerator 3 is reduced. As a result, the supply amount of the lean liquid supplied from the regenerator 3 to the lean line 14 is reduced. Further, by reducing the opening degree of the recovery line valve 83, the supply amount of the lean liquid supplied to the absorber 2 via the lean line 14 is reduced. In this way, the amount of the lean liquid generated in the regenerator 3 and the supply amount of the generated lean liquid to the absorber 2 are adjusted according to the amount of carbon dioxide supplied to the absorber 2. Therefore, a decrease in the recovery rate of carbon dioxide in the absorber 2 can be suppressed by adjusting the supply amount of the absorption liquid. As a result, it is possible to further suppress the discharge amount of the gas containing carbon dioxide from the absorber 2 to the outside.

(7) A carbon dioxide recovery system 1B according to a seventh aspect is the carbon dioxide recovery system 1A, 1B, 1C, 1D according to (5) or (6), further including: an absorber discharge line 12 configured to discharge the absorber discharge gas discharged from the absorber 2 to the outside, in which the recycle unit 70, 70A, 70B, 70C further includes a bypass line 85 configured to connect the recycle line 60 and the absorber discharge line 12, and a first bypass valve 86 configured to adjust a supply amount of the regenerator discharge gas from the recycle line 60 to the absorber discharge line 12, the first bypass valve 86 being installed in the bypass line 85, and the carbon dioxide amount adjustment unit 110, 110B, 110C is configured to open the first bypass valve 86 when the amount of carbon dioxide contained in the gas detected by the recovery amount detection unit 106 exceeds the amount reference, and close the first bypass valve 86 when the amount of carbon dioxide falls below the amount reference.

According to such a configuration, the first bypass valve 86 is opened when the amount of carbon dioxide exceeds the amount reference. By opening the first bypass valve 86, the regenerator discharge gas flowing through the recycle line 60 is fed from the bypass line 85 to the absorber discharge line 12, and the amount fed to the treatment target gas line 11 is reduced. That is, most of the regenerator discharge gas flowing through the recycle line 60 is discharged to the outside without being fed to the absorber 2. In addition, the first bypass valve 86 is closed when the amount of carbon dioxide falls below the amount reference. By closing the first bypass valve 86, the bypass line 85 becomes non-flowable, and the regenerator discharge gas is fed to the treatment target gas line 11. That is, the regenerator discharge gas flowing through the first recycle line 61 is fed to the absorber 2. In this way, when the amount of carbon dioxide supplied to the absorber 2 exceeds the amount of carbon dioxide that can be absorbed by the absorber 2 and the treatment in the absorber 2 is not possible, it is possible to suppress the excessive supply of carbon dioxide to the absorber 2. Therefore, it is possible to suppress the destabilization of the treatment due to the failure of the absorber 2 caused by the excessive supply of carbon dioxide to the absorber 2. As a result, it is possible to stably suppress the amount of gas containing carbon dioxide discharged from the absorber 2 to the outside.

(8) A carbon dioxide recovery system 1C according to an eighth aspect is the carbon dioxide recovery system 1A, 1B, 1C, 1D according to (7), in which the recycle unit 70, 70A, 70B, 70C further includes a second bypass valve 87 configured to adjust a supply amount of the regenerator discharge gas from the recycle line 60 to the treatment target gas line 11, the second bypass valve 87 being installed between arrangement positions of the first recycle valve 71 and the second recycle valve 73 and a connection position between the treatment target gas line 11 and the recycle line 60, and the carbon dioxide amount adjustment unit 110, 110B, 110C is configured to open the first bypass valve 86 and close the second bypass valve 87 when the amount of carbon dioxide contained in the gas detected by the recovery amount detection unit 106 exceeds the amount reference, and close the first bypass valve 86 and open the second bypass valve 87 when the amount of carbon dioxide falls below the amount reference.

According to such a configuration, when the amount of carbon dioxide exceeds the amount reference, the first bypass valve 86 is opened and the second bypass valve 87 is closed. By closing the second bypass valve 87 together with the opening of the first bypass valve 86, the flow of the regenerator discharge gas from the first recycle line 61 to the treatment target gas line 11 is completely blocked. The regenerator discharge gas flowing through the first recycle line 61 is discharged to the outside without being fed to the absorber 2 at all. In this way, when the regenerator discharge gas is supplied to the absorber discharge line 12 via the first bypass valve 86, the flow of the regenerator discharge gas to the treatment target gas line 11 is completely blocked, so that it is possible to reliably suppress the destabilization of the treatment caused by the excessive supply of carbon dioxide to the absorber 2. As a result, it is possible to more stably suppress the amount of gas containing carbon dioxide discharged from the absorber 2 to the outside.

(9) A carbon dioxide recovery system 1D according to a ninth aspect is the carbon dioxide recovery system 1A, 1B, 1C, 1D according to any one of (4) to (8), further including: a lean line 14 configured to supply, to the absorber 2, the absorption liquid discharged from the regenerator 3 and from which the carbon dioxide is released; a lean tank 91 configured to store the absorption liquid from which the carbon dioxide is released, the absorption liquid flowing through the lean line 14; a lean valve 92 configured to adjust a supply amount of the absorption liquid between the lean tank 91 and the lean line 14; a rich line 13 configured to supply, to the regenerator 3, the absorption liquid discharged from the absorber 2 and absorbing the carbon dioxide; a rich tank 93 configured to store the absorption liquid absorbing the carbon dioxide, the absorption liquid flowing through the rich line 13; and a rich valve 94 configured to adjust a supply amount of the absorption liquid between the rich tank 93 and the rich line 13, in which the carbon dioxide amount adjustment unit 110, 110B, 110C is configured to increase, via the lean valve 92, a supply amount of the absorption liquid from the lean tank 91 to the lean line 14 and increase, via the rich valve 94, a supply amount of the absorption liquid from the rich line 13 to the rich tank 93 when the amount of carbon dioxide contained in the gas detected by the recovery amount detection unit 106 exceeds the amount reference, and increase, via the rich valve 94, a supply amount of the absorption liquid from the rich tank 93 to the rich line 13 and increase, via the lean valve 92, a supply amount of the absorption liquid from the lean line 14 to the lean tank 91 when the amount of carbon dioxide falls below the amount reference.

According to such a configuration, when the total amount of carbon dioxide exceeds the amount reference, the lean valve 92 increases the supply amount of the absorption liquid from the lean tank 91 to the lean line 14 and the rich valve 94 increases the supply amount of the absorption liquid from the rich line 13 to the rich tank 93. That is, the proportion of the lean liquid in the absorption liquid circulating through the lean line 14 and the rich line 13 can be increased. As a result, the amount of the lean liquid supplied to the absorber 2 can be increased, and the amount of carbon dioxide treated in the absorber 2 can be increased. In addition, when the total amount of carbon dioxide falls below the amount reference, the rich valve 94 increases the supply amount of the absorption liquid from the rich tank 93 to the rich line 13 and the lean valve 92 increases the supply amount of the absorption liquid from the lean line 14 to the lean tank 91. That is, the proportion of the rich liquid in the absorption liquid circulating through the lean line 14 and the rich line 13 can be increased. As a result, the amount of the lean liquid supplied to the absorber 2 can be reduced, and the amount of carbon dioxide treated in the absorber 2 can be reduced. In this way, the supply amount of the lean liquid supplied to the absorber 2 is adjusted according to the total amount of carbon dioxide supplied to the absorber 2. Therefore, a decrease in the recovery rate of carbon dioxide in the absorber 2 can be suppressed by adjusting the supply amount of the absorption liquid. As a result, it is possible to further suppress the discharge amount of the gas containing carbon dioxide from the absorber 2 to the outside.

(10) A carbon dioxide recovery system 1D according to a tenth aspect is the carbon dioxide recovery system 1, 1A, 1B, 1C, 1D according to any one of (1) to (9), in which the control unit 100, 100A, 100B, 100C, 100D is configured to open the first recycle valve 71 and the second recycle valve 73 when a predetermined condition is estimated to be satisfied under which a flow state of the regenerator discharge gas flowing through the regenerator discharge line 15 is considered to be rapidly changed.

According to such a configuration, when the flow state of the regenerator discharge gas satisfies the condition, the first recycle valve 71 and the second recycle valve 73 are opened. Therefore, when the flow state of the regenerator discharge gas in the regenerator discharge line 15 changes rapidly, the regenerator discharge gas discharged from the regenerator 3 can be fed to the absorber 2 and recycled without being discharged to the outside. Therefore, the discharge amount of the gas containing carbon dioxide can be suppressed to the outside in response to the rapid change in the flow state of the regenerator discharge gas discharged from the regenerator 3.

### INDUSTRIAL APPLICABILITY

According to the carbon dioxide recovery system of the present disclosure, it is possible to adjust the amount of carbon dioxide returned from the regenerator to the absorber and suppress the discharge amount to the outside.

### REFERENCE SIGNS LIST

1, 1A, 1B, 1C, 1D Carbon dioxide recovery system
2 Absorber
11 Treatment target gas line
21 Gas blow unit
12 Absorber discharge line
3 Regenerator
31 Reboiler
13 Rich line
35 Rich pump
14 Lean line
37 Lean pump
38 Cooler
4 Absorption liquid heat exchanger
15 Regenerator discharge line
5 Discharge compressor
60 Recycle line
61 First recycle line
62 Second recycle line
70, 70A, 70B, 70C Recycle unit
71 First recycle valve
72 First pressure detection unit
73 Second recycle valve
74 Second pressure detection unit
75 Discharge concentration detection unit
100, 100A, 100B, 100C, 100D Control unit
101, 101D Input unit
102, 102D Determination unit
103 First valve control unit
104 Second valve control unit
81 Treatment target gas information detection unit
82 Regenerator discharge gas information detection unit
83 Recovery line valve
84 Steam supply valve
106 Recovery amount detection unit
110, 110B, 110C Carbon dioxide amount adjustment unit
111, 111B, 111C Amount determination unit
112 Recovery control unit
113 Steam control unit
85 Bypass line
86 First bypass valve
87 Second bypass valve
115 First bypass control unit
116 Second bypass control unit
91 Lean tank
92 Lean valve
93 Rich tank
94 Rich valve
118 Lean control unit
119 Rich control unit

## Claims

1. A carbon dioxide recovery system comprising:
an absorber configured to bring a treatment target gas containing carbon dioxide into contact with an absorption liquid and discharge the absorption liquid absorbing the carbon dioxide and an absorber discharge gas containing the treatment target gas from which the carbon dioxide is removed;
a regenerator configured to release the carbon dioxide from the absorption liquid discharged from the absorber and discharge the absorption liquid from which the carbon dioxide is released and a regenerator discharge gas containing the carbon dioxide;
a treatment target gas line configured to introduce the treatment target gas into the absorber;
a regenerator discharge line configured to discharge the regenerator discharge gas discharged from the regenerator to outside of the carbon dioxide recovery system;
a discharge compressor configured to compress the regenerator discharge gas, the discharge compressor being installed in the regenerator discharge line;
a recycle line configured to connect the regenerator discharge line and the treatment target gas line; and
a recycle unit configured to adjust a supply amount of the regenerator discharge gas supplied from the regenerator discharge line to the treatment target gas line through the recycle line,
wherein the recycle unit includes
a first recycle line configured to supply at least a part of the regenerator discharge gas before being compressed by the discharge compressor to the treatment target gas line, the first recycle line being connected to the regenerator discharge line between the regenerator and the discharge compressor, and
a second recycle line configured to supply at least a part of the regenerator discharge gas compressed by the discharge compressor to the treatment target gas line,
the recycle unit further includes
a first recycle valve configured to adjust the supply amount of the regenerator discharge gas from the regenerator discharge line to the treatment target gas line, the first recycle valve being installed in the first recycle line,
a first pressure detection unit configured to detect information on a pressure of the regenerator discharge gas flowing through the regenerator discharge line between the regenerator and the discharge compressor,
a second recycle valve configured to adjust the supply amount of the regenerator discharge gas from the regenerator discharge line to the treatment target gas line, the second recycle valve being installed in the second recycle line,
a second pressure detection unit configured to detect information on a pressure of the regenerator discharge gas compressed by the discharge compressor and flowing through the regenerator discharge line, and
a control unit configured to control opening degrees of the first recycle valve and the second recycle valve, and
the control unit is configured to
open the first recycle valve when the pressure detected by the first pressure detection unit exceeds a predetermined pressure reference and close the first recycle valve when the pressure detected by the first pressure detection unit falls below the pressure reference, and
open the second recycle valve when the pressure detected by the second pressure detection unit exceeds the pressure reference and close the second recycle valve when the pressure detected by the second pressure detection unit falls below the pressure reference.

2. The carbon dioxide recovery system according to Claim 1,
wherein the recycle unit further includes a discharge concentration detection unit configured to detect information on a concentration of the carbon dioxide in the regenerator discharge gas flowing through the regenerator discharge line, and
the control unit is configured to control the first recycle valve and the second recycle valve such that at least one of the first recycle valve and the second recycle valve is opened when the concentration detected by the discharge concentration detection unit falls below a predetermined concentration reference.

3. The carbon dioxide recovery system according to Claim 1 or 2, further comprising:
a gas blow unit configured to blow the treatment target gas introduced into the absorber, the gas blow unit being installed in the treatment target gas line,
wherein the recycle line is connected to the treatment target gas line such that at least a part of the regenerator discharge gas is merged with the treatment target gas before being supplied to the gas blow unit.

4. The carbon dioxide recovery system according to Claim 1 or 2, further comprising:
a recovery amount detection unit configured to detect information on an amount of the carbon dioxide contained in a gas flowing through the treatment target gas line; and
a carbon dioxide amount adjustment unit configured to adjust an amount of the carbon dioxide to be treated in the absorber when the amount of the carbon dioxide contained in the gas detected by the recovery amount detection unit exceeds a predetermined amount reference.

5. The carbon dioxide recovery system according to Claim 4, further comprising:
a treatment target gas information detection unit configured to detect information on a flow rate of the treatment target gas flowing through the treatment target gas line and information on a concentration of the carbon dioxide in the treatment target gas; and
a regenerator discharge gas information detection unit configured to detect information on a flow rate of the regenerator discharge gas flowing through the recycle line and information on a concentration of the carbon dioxide in the regenerator discharge gas,
wherein the recovery amount detection unit is configured to detect the information on the amount of the carbon dioxide contained in the gas supplied to the absorber from the information on the flow rate of the treatment target gas and the information on the concentration of the carbon dioxide in the treatment target gas detected by the treatment target gas information detection unit, and the information on the flow rate of the regenerator discharge gas and the information on the concentration of the carbon dioxide in the regenerator discharge gas detected by the regenerator discharge gas information detection unit.

6. The carbon dioxide recovery system according to Claim 4, further comprising:
a lean line configured to supply, to the absorber, the absorption liquid discharged from the regenerator and from which the carbon dioxide is released;
a reboiler configured to heat the absorption liquid discharged from the regenerator by exchanging heat with steam;
a recovery line valve configured to adjust a supply amount of the absorption liquid from the regenerator to the absorber, the recovery line valve being installed in the lean line; and
a steam supply valve configured to adjust a supply amount of the steam to the reboiler,
wherein the carbon dioxide amount adjustment unit is configured to control the recovery line valve and the steam supply valve such that opening degrees of the recovery line valve and the steam supply valve are increased when the amount of the carbon dioxide contained in the gas detected by the recovery amount detection unit exceeds the amount reference, and such that the opening degrees of the recovery line valve and the steam supply valve are decreased when the amount of the carbon dioxide falls below the amount reference.

7. The carbon dioxide recovery system according to Claim 4, further comprising:
an absorber discharge line configured to discharge the absorber discharge gas discharged from the absorber to the outside,
wherein the recycle unit further includes
a bypass line configured to connect the recycle line and the absorber discharge line, and
a first bypass valve configured to adjust a supply amount of the regenerator discharge gas from the recycle line to the absorber discharge line, the first bypass valve being installed in the bypass line, and
the carbon dioxide amount adjustment unit is configured to open the first bypass valve when the amount of the carbon dioxide contained in the gas detected by the recovery amount detection unit exceeds the amount reference, and close the first bypass valve when the amount of the carbon dioxide falls below the amount reference.

8. The carbon dioxide recovery system according to Claim 7,
wherein the recycle unit further includes a second bypass valve configured to adjust a supply amount of the regenerator discharge gas from the recycle line to the treatment target gas line, the second bypass valve being installed between arrangement positions of the first recycle valve and the second recycle valve and a connection position between the treatment target gas line and the recycle line, and
the carbon dioxide amount adjustment unit is configured to open the first bypass valve and close the second bypass valve when the amount of the carbon dioxide contained in the gas detected by the recovery amount detection unit exceeds the amount reference, and close the first bypass valve and open the second bypass valve when the amount of the carbon dioxide falls below the amount reference.

9. The carbon dioxide recovery system according to Claim 4, further comprising:
a lean line configured to supply, to the absorber, the absorption liquid discharged from the regenerator and from which the carbon dioxide is released;
a lean tank configured to store the absorption liquid from which the carbon dioxide is released, the absorption liquid flowing through the lean line;
a lean valve configured to adjust a supply amount of the absorption liquid between the lean tank and the lean line;
a rich line configured to supply, to the regenerator, the absorption liquid discharged from the absorber and absorbing the carbon dioxide;
a rich tank configured to store the absorption liquid absorbing the carbon dioxide, the absorption liquid flowing through the rich line; and
a rich valve configured to adjust a supply amount of the absorption liquid between the rich tank and the rich line,
wherein the carbon dioxide amount adjustment unit is configured to
increase, via the lean valve, a supply amount of the absorption liquid from the lean tank to the lean line and increase, via the rich valve, a supply amount of the absorption liquid from the rich line to the rich tank when the amount of the carbon dioxide contained in the gas detected by the recovery amount detection unit exceeds the amount reference, and
increase, via the rich valve, a supply amount of the absorption liquid from the rich tank to the rich line and increase, via the lean valve, a supply amount of the absorption liquid from the lean line to the lean tank when the amount of carbon dioxide falls below the amount reference.

10. The carbon dioxide recovery system according to Claim 1 or 2,
wherein the control unit is configured to open the first recycle valve and the second recycle valve when a predetermined condition is estimated to be satisfied under which a flow state of the regenerator discharge gas flowing through the regenerator discharge line is considered to be rapidly changed.
